# EUROPEAN PATENT APPLICATION

(11) **EP 4 609 725 A1**
(43) Date of publication of application: **03.09.2025**
(21) Application number: 23882722.4
(22) Date of filing: 26.10.2023
(51) Int. Cl.: A23L 27/00, A23C 11/00, A23J 3/16, A23L 23/00, A23L 27/20, A23L 27/40

(54) **AGENT FOR ENHANCING SALTINESS OR SUPPRESSING OFF-FLAVOR**

(30) Priority: 28.10.2022 JP 2022173729; 25.08.2023 JP 2023137572
(71) Applicant: AJINOMOTO CO., INC., Chuo-ku Tokyo 104-8315 (JP)
(72) Inventor: KANNO, Kyoko, Kawasaki-shi, Kanagawa 210-8681 (JP); KITAJIMA, Seiji, Kawasaki-shi, Kanagawa 210-8681 (JP); SHIGEOKA, Toru, Kawasaki-shi, Kanagawa 210-8681 (JP); MATSUURA, Yoshiki, Kawasaki-shi, Kanagawa 210-8681 (JP)
(74) Representative: Strehl & Partner mbB
(86) International application number: PCT/JP2023/038697
(87) International publication number: WO 2024/090519

(57) **Abstract**

The present invention aims to provide a new agent for enhancing saltiness or suppressing an off-taste, and the like.

The present invention relates to an agent for enhancing saltiness or suppressing an off-taste, which contains β-caryophyllene oxide, and the like.

## Description

### [Technical Field]

The present invention relates to agents for enhancing saltiness or suppressing off-tastes. The present invention also relates to methods for producing sodium chloride- or off-taste substance-containing oral products, and methods for enhancing saltiness or suppressing off-tastes of sodium chloride- or off-taste substance-containing oral products.

### [Background Art]

Sodium chloride is used in foods and the like for various purposes such as imparting saltiness and the like. Since excessive intake of sodium chloride increases the risk of causing hypertension, cardiac disease or the like, and because of the recent health consciousness, efforts have been conventionally made to reduce the amount of sodium chloride intake. The amount of sodium chloride intake can be reduced by reducing the amount of sodium chloride used (i.e., sodium chloride reduction) when manufacturing foods or the like. In sodium chloride-reduced foods or the like, the shortage of saltiness sometimes reduces a sense of satisfaction. Therefore, various techniques for enhancing the saltiness of foods without increasing the amount of sodium chloride intake have conventionally been investigated.

For example, it has been proposed to use a mixture of spice extracts of pepper, ginger, clove, and cinnamon as saltiness enhancer, and to use specific aroma components to enhance saltiness and reduce unpleasant odors (Patent Literatures 1, 2).

Also, in order to enhance saltiness without increasing the ingestion amount of sodium chloride, saltiness substitutes such as potassium chloride or the like have conventionally been used. However, saltiness substitutes have the disadvantage of exhibiting unpleasant off-tastes such as bitterness, a harsh taste, or the like.

It has been proposed to reduce or suppress the bitterness and harsh taste of potassium chloride or the like by using certain masking substances or certain compounds (Patent Literatures 3, 4).

On the other hand, it has been reported that β-caryophyllene can impart normal pressure extract sensation, enhance the feeling of fat or oil, and suppress acidic taste (Patent Literature 5), that β-caryophyllene oxide can mask unpleasant odors derived from plants (Patent Literature 6), and that cyclotene or an analogous compound thereof heated in oil can enhance the mouth-coating feeling (Patent Literature 7).

### [Citation List]

### [Patent Literature]

[Patent Literature 1]
   JP 2012-239398 A
[Patent Literature 2]
   JP 2014-155481 A
[Patent Literature 3]
   JP 2020-198858 A
[Patent Literature 4]
   WO 2021/100729
[Patent Literature 5]
   JP 2019-50774 A
[Patent Literature 6]
   WO 2021/193429
[Patent Literature 7]
   WO 2022/054917

### [Summary of Invention]

### [Technical Problem]

The present invention has been made in consideration of the above-mentioned circumstances, and it is an object of the present invention to newly provide saltiness enhancers, oral products with enhanced saltiness, and production methods thereof, methods for enhancing saltiness, and the like.

In addition, the problem to be solved by the present invention is to newly provide agents for suppressing off-tastes of off-taste substances such as saltiness substitute substances and the like, oral products with suppressed off-tastes and production methods thereof, methods for suppressing off-tastes and the like.

### [Solution to Problem]

The present inventors have conducted intensive studies in an attempt to solve the aforementioned problems and found that β-caryophyllene oxide can enhance saltiness. The present inventors have also found that β-caryophyllene oxide can suppress off-tastes of saltiness substitute substances. Furthermore, the present inventors have also found that β-caryophyllene oxide can also suppress off-tastes of off-taste substances other than the saltiness substitute substances. The present inventors have conducted further studies based on these findings and completed the present invention.

Accordingly, the present invention provides the following.

[1] An agent for enhancing saltiness or suppressing an off-taste, which comprises β-caryophyllene oxide.
[2] The agent of [1], further comprising γ-glutamyl peptide or a salt thereof.
[3] The agent of [2], wherein the γ-glutamyl peptide is γ-Glu-Val-Gly.
[4] The agent of any one of [1] to [3], which is an agent for enhancing saltiness of a sodium chloride-containing oral product.
[5] The agent of [4], wherein the sodium chloride-containing oral product is a sodium chloride-containing food or a sodium chloride-containing oral medicament.
[6] The agent of [4] or [5], wherein the content of sodium chloride in the sodium chloride-containing oral product is 0.01 wt% or more with respect to the total weight of the sodium chloride-containing oral product at the time of ingestion.
[7] The agent of any one of [4] to [6], wherein the content of sodium chloride in the sodium chloride-containing oral product is 0.01 to 15 wt% with respect to the total weight of the sodium chloride-containing oral product at the time of ingestion.
[8] The agent of any one of [4] to [7], wherein the content of sodium chloride in the sodium chloride-containing oral product is 0.05 to 10 wt% with respect to the total weight of the sodium chloride-containing oral product at the time of ingestion.
[9] The agent of any one of [4] to [8], wherein the content of sodium chloride in the sodium chloride-containing oral product is 0.1 to 5 wt% with respect to the total weight of the sodium chloride-containing oral product at the time of ingestion.
[10] The agent of any one of [4] to [9], wherein the content of sodium chloride in the sodium chloride-containing oral product is 0.5 to 3 wt% with respect to the total weight of the sodium chloride-containing oral product at the time of ingestion.
[11] The agent of any one of [4] to [10], which is added to the sodium chloride-containing oral product such that the amount of β-caryophyllene oxide to be added to the sodium chloride-containing oral product is 30 to 50000 ppb by weight with respect to the total weight of the sodium chloride-containing oral product at the time of ingestion.
[12] The agent of any one of [4] to [11], which is added to the sodium chloride-containing oral product such that the amount of β-caryophyllene oxide to be added to the sodium chloride-containing oral product is 80 to 30000 ppb by weight with respect to the total weight of the sodium chloride-containing oral product at the time of ingestion.
[13] The agent of any one of [4] to [12], which is added to the sodium chloride-containing oral product such that the amount of β-caryophyllene oxide to be added to the sodium chloride-containing oral product is 300 to 20000 ppb by weight with respect to the total weight of the sodium chloride-containing oral product at the time of ingestion.
[14] The agent of any one of [4] to [13], which is added to the sodium chloride-containing oral product such that the amount of β-caryophyllene oxide to be added to the sodium chloride-containing oral product is 800 to 15000 ppb by weight with respect to the total weight of the sodium chloride-containing oral product at the time of ingestion.
[15] The agent of any one of [4] to [14], which further comprises γ-glutamyl peptide or a salt thereof, and is added to the sodium chloride-containing oral product such that the amount of β-caryophyllene oxide to be added to the sodium chloride-containing oral product is 15 to 1500 ppb by weight with respect to the total weight of the sodium chloride-containing oral product at the time of ingestion.
[16] The agent of any one of [4] to [15], which further comprises γ-glutamyl peptide or a salt thereof, and is added to the sodium chloride-containing oral product such that the amount of β-caryophyllene oxide to be added to the sodium chloride-containing oral product is 20 to 1200 ppb by weight with respect to the total weight of the sodium chloride-containing oral product at the time of ingestion.
[17] The agent of any one of [4] to [16], which further comprises γ-glutamyl peptide or a salt thereof, and is added to the sodium chloride-containing oral product such that the amount of β-caryophyllene oxide to be added to the sodium chloride-containing oral product is 25 to 120 ppb by weight with respect to the total weight of the sodium chloride-containing oral product at the time of ingestion.
[18] The agent of any one of [4] to [17], which further comprises γ-glutamyl peptide or a salt thereof, and is added to the sodium chloride-containing oral product such that the amount of β-caryophyllene oxide to be added to the sodium chloride-containing oral product is 30 to 70 ppb by weight with respect to the total weight of the sodium chloride-containing oral product at the time of ingestion.
[19] The agent of any one of [4] to [18], which further comprises γ-glutamyl peptide or a salt thereof, and is added to the sodium chloride-containing oral product such that the amount of γ-glutamyl peptide or a salt thereof to be added to the sodium chloride-containing oral product is 100 to 10000 ppb by weight with respect to the total weight of the sodium chloride-containing oral product at the time of ingestion.
[20] The agent of any one of [4] to [19], which further comprises γ-glutamyl peptide or a salt thereof, and is added to the sodium chloride-containing oral product such that the amount of γ-glutamyl peptide or a salt thereof to be added to the sodium chloride-containing oral product is 200 to 7000 ppb by weight with respect to the total weight of the sodium chloride-containing oral product at the time of ingestion.
[21] The agent of any one of [4] to [20], which further comprises γ-glutamyl peptide or a salt thereof, and is added to the sodium chloride-containing oral product such that the amount of γ-glutamyl peptide or a salt thereof to be added to the sodium chloride-containing oral product is 300 to 1200 ppb by weight with respect to the total weight of the sodium chloride-containing oral product at the time of ingestion.
[22] The agent of any one of [4] to [21], which further comprises γ-glutamyl peptide or a salt thereof, and is added to the sodium chloride-containing oral product such that the amount of γ-glutamyl peptide or a salt thereof to be added to the sodium chloride-containing oral product is 400 to 800 ppb by weight with respect to the total weight of the sodium chloride-containing oral product at the time of ingestion.
[23] The agent of any one of [1] to [3], which is an agent for suppressing an off-taste of an off-taste substance-containing oral product.
[24] The agent of [23], wherein the off-taste substance-containing oral product is an off-taste substance-containing food or an off-taste substance-containing oral medicament.
[25] The agent of [23] or [24], wherein the aforementioned off-taste substance comprises at least one substance selected from the group consisting of saltiness-substituting or -enhancing substance, amino acid or a salt thereof, a high-intensity sweetener, a plant-derived protein, an emulsifier, and a bacteriostatic agent.
[26] The agent of any one of [23] to [25], wherein the aforementioned off-taste substance comprises at least one substance selected from the group consisting of potassium chloride, branched chain amino acid or a salt thereof, stevia, soybean protein, fatty acid monoglyceride, and sodium acetate.
[27] The agent of any one of [23] to [26], wherein the aforementioned agent for suppressing an off-taste is an agent for suppressing at least one off-taste selected from the group consisting of bitterness, a rough taste, a harsh taste, a metallic taste, and an astringent taste.
[28] The agent of any one of [23] to [27], wherein the content of the off-taste substance in the off-taste substance-containing oral product is 0.01 to 10 wt% with respect to the total weight of the off-taste substance-containing oral product at the time of ingestion.
[29] The agent of any one of [23] to [28], wherein the content of the off-taste substance in the off-taste substance-containing oral product is 0.03 to 5 wt% with respect to the total weight of the off-taste substance-containing oral product at the time of ingestion.
[30] The agent of any one of [23] to [29], wherein the content of the off-taste substance in the off-taste substance-containing oral product is 0.05 to 3 wt% with respect to the total weight of the off-taste substance-containing oral product at the time of ingestion.
[31] The agent of any one of [23] to [30], wherein the content of the off-taste substance in the off-taste substance-containing oral product is 0.1 to 1 wt% with respect to the total weight of the off-taste substance-containing oral product at the time of ingestion.
[32] The agent of any one of [23] to [31], which is added to the off-taste substance-containing oral product such that the amount of β-caryophyllene oxide to be added to the off-taste substance-containing oral product is 30 to 50000 ppb by weight with respect to the total weight of the off-taste substance-containing oral product at the time of ingestion.
[33] The agent of any one of [23] to [32], which is added to the off-taste substance-containing oral product such that the amount of β-caryophyllene oxide to be added to the off-taste substance-containing oral product is 80 to 30000 ppb by weight with respect to the total weight of the off-taste substance-containing oral product at the time of ingestion.
[34] The agent of any one of [23] to [33], which is added to the off-taste substance-containing oral product such that the amount of β-caryophyllene oxide to be added to the off-taste substance-containing oral product is 100 to 20000 ppb by weight with respect to the total weight of the off-taste substance-containing oral product at the time of ingestion.
[35] The agent of any one of [23] to [34], which is added to the off-taste substance-containing oral product such that the amount of β-caryophyllene oxide to be added to the off-taste substance-containing oral product is 300 to 15000 ppb by weight with respect to the total weight of the off-taste substance-containing oral product at the time of ingestion.
[36] The agent of any one of [23] to [35], which further comprises γ-glutamyl peptide or a salt thereof and is added to the off-taste substance-containing oral product such that the amount of β-caryophyllene oxide to be added to the off-taste substance-containing oral product is 0.1 to 150 ppb by weight with respect to the total weight of the off-taste substance-containing oral product at the time of ingestion.
[37] The agent of any one of [23] to [36], which further comprises γ-glutamyl peptide or a salt thereof and is added to the off-taste substance-containing oral product such that the amount of β-caryophyllene oxide to be added to the off-taste substance-containing oral product is 1 to 100 ppb by weight with respect to the total weight of the off-taste substance-containing oral product at the time of ingestion.
[38] The agent of any one of [23] to [37], which further comprises γ-glutamyl peptide or a salt thereof and is added to the off-taste substance-containing oral product such that the amount of β-caryophyllene oxide to be added to the off-taste substance-containing oral product is 3 to 70 ppb by weight with respect to the total weight of the off-taste substance-containing oral product at the time of ingestion.
[39] The agent of any one of [23] to [38], which further comprises γ-glutamyl peptide or a salt thereof and is added to the off-taste substance-containing oral product such that the amount of β-caryophyllene oxide to be added to the off-taste substance-containing oral product is 10 to 50 ppb by weight with respect to the total weight of the off-taste substance-containing oral product at the time of ingestion.
[40] The agent of any one of [23] to [39], which further comprises γ-glutamyl peptide or a salt thereof and is added to the off-taste substance-containing oral product such that the amount of γ-glutamyl peptide or a salt thereof to be added to the off-taste substance-containing oral product is 100 to 30000 ppb by weight with respect to the total weight of the off-taste substance-containing oral product at the time of ingestion.
[41] The agent of any one of [23] to [40], which further comprises γ-glutamyl peptide or a salt thereof and is added to the off-taste substance-containing oral product such that the amount of γ-glutamyl peptide or a salt thereof to be added to the off-taste substance-containing oral product is 500 to 25000 ppb by weight with respect to the total weight of the off-taste substance-containing oral product at the time of ingestion.
[42] The agent of any one of [23] to [41], which further comprises γ-glutamyl peptide or a salt thereof and is added to the off-taste substance-containing oral product such that the amount of γ-glutamyl peptide or a salt thereof to be added to the off-taste substance-containing oral product is 1000 to 20000 ppb by weight with respect to the total weight of the off-taste substance-containing oral product at the time of ingestion.
[43] The agent of any one of [23] to [42], which further comprises γ-glutamyl peptide or a salt thereof and is added to the off-taste substance-containing oral product such that the amount of γ-glutamyl peptide or a salt thereof to be added to the off-taste substance-containing oral product is 2800 to 15000 ppb by weight with respect to the total weight of the off-taste substance-containing oral product at the time of ingestion.
[44] A method for producing a sodium chloride- or off-taste substance-containing oral product, comprising adding β-caryophyllene oxide.
[45] The production method of [44], further comprising adding γ-glutamyl peptide or a salt thereof.
[46] The production method of [45], wherein the γ-glutamyl peptide is γ-Glu-Val-Gly.
[47] The production method of any one of [44] to [46], wherein the sodium chloride- or off-taste substance-containing oral product is a sodium chloride- or off-taste substance-containing food, or a sodium chloride- or off-taste substance-containing oral medicament.
[48] The production method of any one of [44] to [47], wherein the aforementioned production method is a method for producing a sodium chloride-containing oral product.
[49] The production method of [48], wherein the sodium chloride-containing oral product is a sodium chloride-containing food or a sodium chloride-containing oral medicament.
[50] The production method of [48] or [49], wherein the content of sodium chloride in the sodium chloride-containing oral product is 0.01 wt% or more with respect to the total weight of the sodium chloride-containing oral product at the time of ingestion.
[51] The production method of any one of [48] to [50], wherein the content of sodium chloride in the sodium chloride-containing oral product is 0.01 to 15 wt% with respect to the total weight of the sodium chloride-containing oral product at the time of ingestion.
[52] The production method of any one of [48] to [51], wherein the content of sodium chloride in the sodium chloride-containing oral product is 0.05 to 10 wt% with respect to the total weight of the sodium chloride-containing oral product at the time of ingestion.
[53] The production method of any one of [48] to [52], wherein the content of sodium chloride in the sodium chloride-containing oral product is 0.1 to 5 wt% with respect to the total weight of the sodium chloride-containing oral product at the time of ingestion.
[54] The production method of any one of [48] to [53], wherein the content of sodium chloride in the sodium chloride-containing oral product is 0.5 to 3 wt% with respect to the total weight of the sodium chloride-containing oral product at the time of ingestion.
[55] The production method of any one of [48] to [54], wherein the amount of β-caryophyllene oxide to be added is 30 to 50000 ppb by weight with respect to the total weight of the sodium chloride-containing oral product at the time of ingestion.
[56] The production method of any one of [48] to [55], wherein the amount of β-caryophyllene oxide to be added is 80 to 30000 ppb by weight with respect to the total weight of the sodium chloride-containing oral product at the time of ingestion.
[57] The production method of any one of [48] to [56], wherein the amount of β-caryophyllene oxide to be added is 300 to 20000 ppb by weight with respect to the total weight of the sodium chloride-containing oral product at the time of ingestion.
[58] The production method of any one of [48] to [57], wherein the amount of β-caryophyllene oxide to be added is 800 to 15000 ppb by weight with respect to the total weight of the sodium chloride-containing oral product at the time of ingestion.
[59] The production method of any one of [48] to [58], wherein the method further comprises adding γ-glutamyl peptide or a salt thereof, and the amount of β-caryophyllene oxide to be added is 15 to 1500 ppb by weight with respect to the total weight of the sodium chloride-containing oral product at the time of ingestion.
[60] The production method of any one of [48] to [59], wherein the method further comprises adding γ-glutamyl peptide or a salt thereof, and the amount of β-caryophyllene oxide to be added is 20 to 1200 ppb by weight with respect to the total weight of the sodium chloride-containing oral product at the time of ingestion.
[61] The production method of any one of [48] to [60], wherein the method further comprises adding γ-glutamyl peptide or a salt thereof, and the amount of β-caryophyllene oxide to be added is 25 to 120 ppb by weight with respect to the total weight of the sodium chloride-containing oral product at the time of ingestion.
[62] The production method of any one of [48] to [61], wherein the method further comprises adding γ-glutamyl peptide or a salt thereof, and the amount of β-caryophyllene oxide to be added is 30 to 70 ppb by weight with respect to the total weight of the sodium chloride-containing oral product at the time of ingestion.
[63] The production method of any one of [48] to [62], wherein the method further comprises adding γ-glutamyl peptide or a salt thereof, and the amount of γ-glutamyl peptide or a salt thereof to be added is 100 to 10000 ppb by weight with respect to the total weight of the sodium chloride-containing oral product at the time of ingestion.
[64] The production method of any one of [48] to [63], wherein the method further comprises adding γ-glutamyl peptide or a salt thereof, and the amount of γ-glutamyl peptide or a salt thereof to be added is 200 to 7000 ppb by weight with respect to the total weight of the sodium chloride-containing oral product at the time of ingestion.
[65] The production method of any one of [48] to [64], wherein the method further comprises adding γ-glutamyl peptide or a salt thereof, and the amount of γ-glutamyl peptide or a salt thereof to be added is 300 to 1200 ppb by weight with respect to the total weight of the sodium chloride-containing oral product at the time of ingestion.
[66] The production method of any one of [48] to [65], wherein the method further comprises adding γ-glutamyl peptide or a salt thereof, and the amount of γ-glutamyl peptide or a salt thereof to be added is 400 to 800 ppb by weight with respect to the total weight of the sodium chloride-containing oral product at the time of ingestion.
[67] The production method of any one of [44] to [47], which is a method for producing an off-taste substance-containing oral product.
[68] The production method of [67], wherein the off-taste substance-containing oral product is an off-taste substance-containing food or an off-taste substance-containing oral medicament.
[69] The production method of [67] or [68], wherein the aforementioned off-taste substance comprises at least one substance selected from the group consisting of saltiness-substituting or -enhancing substance, amino acid or a salt thereof, a high-intensity sweetener, a plant-derived protein, an emulsifier, and a bacteriostatic agent.
[70] The production method of any one of [67] to [69], wherein the aforementioned off-taste substance comprises at least one substance selected from the group consisting of potassium chloride, branched chain amino acid or a salt thereof, stevia, soybean protein, fatty acid monoglyceride, and sodium acetate.
[71] The production method of any one of [67] to [70], wherein the off-taste substance-containing oral product is an oral product comprising an off-taste substance and having a suppressed off-taste.
[72] The production method of [71], wherein the aforementioned off-taste is at least one selected from the group consisting of bitterness, a rough taste, a harsh taste, a metallic taste, and an astringent taste.
[73] The production method of any one of [67] to [72], wherein the content of the off-taste substance in the off-taste substance-containing oral product is 0.01 to 10 wt% with respect to the total weight of the off-taste substance-containing oral product at the time of ingestion.
[74] The production method of any one of [67] to [73], wherein the content of the off-taste substance in the off-taste substance-containing oral product is 0.03 to 5 wt% with respect to the total weight of the off-taste substance-containing oral product at the time of ingestion.
[75] The production method of any one of [67] to [74], wherein the content of the off-taste substance in the off-taste substance-containing oral product is 0.05 to 3 wt% with respect to the total weight of the off-taste substance-containing oral product at the time of ingestion.
[76] The production method of any one of [67] to [75], wherein the content of the off-taste substance in the off-taste substance-containing oral product is 0.1 to 1 wt% with respect to the total weight of the off-taste substance-containing oral product at the time of ingestion.
[77] The production method of any one of [67] to [76], wherein the amount of β-caryophyllene oxide to be added is 30 to 50000 ppb by weight with respect to the total weight of the off-taste substance-containing oral product at the time of ingestion.
[78] The production method of any one of [67] to [77], wherein the amount of β-caryophyllene oxide to be added is 80 to 30000 ppb by weight with respect to the total weight of the off-taste substance-containing oral product at the time of ingestion.
[79] The production method of any one of [67] to [78], wherein the amount of β-caryophyllene oxide to be added is 100 to 20000 ppb by weight with respect to the total weight of the off-taste substance-containing oral product at the time of ingestion.
[80] The production method of any one of [67] to [79], wherein the amount of β-caryophyllene oxide to be added is 300 to 15000 ppb by weight with respect to the total weight of the off-taste substance-containing oral product at the time of ingestion.
[81] The production method of any one of [67] to [80], wherein the method further comprises adding γ-glutamyl peptide or a salt thereof, and the amount of β-caryophyllene oxide to be added is 0.1 to 150 ppb by weight with respect to the total weight of the off-taste substance-containing oral product at the time of ingestion.
[82] The production method of any one of [67] to [81], wherein the method further comprises adding γ-glutamyl peptide or a salt thereof, and the amount of β-caryophyllene oxide to be added is 1 to 100 ppb by weight with respect to the total weight of the off-taste substance-containing oral product at the time of ingestion.
[83] The production method of any one of [67] to [82], wherein the method further comprises adding γ-glutamyl peptide or a salt thereof, and the amount of β-caryophyllene oxide to be added is 3 to 70 ppb by weight with respect to the total weight of the off-taste substance-containing oral product at the time of ingestion.
[84] The production method of any one of [67] to [83], wherein the method further comprises adding γ-glutamyl peptide or a salt thereof, and the amount of β-caryophyllene oxide to be added is 10 to 50 ppb by weight with respect to the total weight of the off-taste substance-containing oral product at the time of ingestion.
[85] The production method of any one of [67] to [84], wherein the method further comprises adding γ-glutamyl peptide or a salt thereof, and the amount of γ-glutamyl peptide or a salt thereof to be added is 100 to 30000 ppb by weight with respect to the total weight of the off-taste substance-containing oral product at the time of ingestion.
[86] The production method of any one of [67] to [85], wherein the method further comprises adding γ-glutamyl peptide or a salt thereof, and the amount of γ-glutamyl peptide or a salt thereof to be added is 500 to 25000 ppb by weight with respect to the total weight of the off-taste substance-containing oral product at the time of ingestion.
[87] The production method of any one of [67] to [86], wherein the method further comprises adding γ-glutamyl peptide or a salt thereof, and the amount of γ-glutamyl peptide or a salt thereof to be added is 1000 to 20000 ppb by weight with respect to the total weight of the off-taste substance-containing oral product at the time of ingestion.
[88] The production method of any one of [67] to [87], wherein the method further comprises adding γ-glutamyl peptide or a salt thereof, and the amount of γ-glutamyl peptide or a salt thereof to be added is 2800 to 15000 ppb by weight with respect to the total weight of the off-taste substance-containing oral product at the time of ingestion.
[89] A method for enhancing saltiness or suppressing an off-taste of a sodium chloride- or off-taste substance-containing oral product, comprising adding β-caryophyllene oxide to the oral product.
[90] The method of [89], further comprising adding γ-glutamyl peptide or a salt thereof to the sodium chloride- or off-taste substance-containing oral product.
[91] The method of [90], wherein the γ-glutamyl peptide is γ-Glu-Val-Gly.
[92] The method of any one of [89] to [91], wherein the sodium chloride- or off-taste substance-containing oral product is a sodium chloride- or off-taste substance-containing food, or a sodium chloride- or off-taste substance-containing oral medicament.
[93] The method of any one of [89] to [92], which is a method for enhancing saltiness of a sodium chloride-containing oral product.
[94] The method of [93], wherein the sodium chloride-containing oral product is a sodium chloride-containing food or a sodium chloride-containing oral medicament.
[95] The method of [93] or [94], wherein the content of sodium chloride in the sodium chloride-containing oral product is 0.01 wt% or more with respect to the total weight of the sodium chloride-containing oral product at the time of ingestion.
[96] The method of any one of [93] to [95], wherein the content of sodium chloride in the sodium chloride-containing oral product is 0.01 to 15 wt% with respect to the total weight of the sodium chloride-containing oral product at the time of ingestion.
[97] The method of any one of [93] to [96], wherein the content of sodium chloride in the sodium chloride-containing oral product is 0.05 to 10 wt% with respect to the total weight of the sodium chloride-containing oral product at the time of ingestion.
[98] The method of any one of [93] to [97], wherein the content of sodium chloride in the sodium chloride-containing oral product is 0.1 to 5 wt% with respect to the total weight of the sodium chloride-containing oral product at the time of ingestion.
[99] The method of any one of [93] to [98], wherein the content of sodium chloride in the sodium chloride-containing oral product is 0.5 to 3 wt% with respect to the total weight of the sodium chloride-containing oral product at the time of ingestion.
[100] The method of any one of [93] to [99], wherein the amount of β-caryophyllene oxide to be added is 30 to 50000 ppb by weight with respect to the total weight of the sodium chloride-containing oral product at the time of ingestion.
[101] The method of any one of [93] to [100], wherein the amount of β-caryophyllene oxide to be added is 80 to 30000 ppb by weight with respect to the total weight of the sodium chloride-containing oral product at the time of ingestion.
[102] The method of any one of [93] to [101], wherein the amount of β-caryophyllene oxide to be added is 300 to 20000 ppb by weight with respect to the total weight of the sodium chloride-containing oral product at the time of ingestion.
[103] The method of any one of [93] to [102], wherein the amount of β-caryophyllene oxide to be added is 800 to 15000 ppb by weight with respect to the total weight of the sodium chloride-containing oral product at the time of ingestion.
[104] The method of any one of [93] to [103], wherein the aforementioned method further comprises adding γ-glutamyl peptide or a salt thereof, and the amount of β-caryophyllene oxide to be added is 15 to 1500 ppb by weight with respect to the total weight of the sodium chloride-containing oral product at the time of ingestion.
[105] The method of any one of [93] to [104], wherein the aforementioned method further comprises adding γ-glutamyl peptide or a salt thereof, and the amount of β-caryophyllene oxide to be added is 20 to 1200 ppb by weight with respect to the total weight of the sodium chloride-containing oral product at the time of ingestion.
[106] The method of any one of [93] to [105], wherein the aforementioned method further comprises adding γ-glutamyl peptide or a salt thereof, and the amount of β-caryophyllene oxide to be added is 25 to 120 ppb by weight with respect to the total weight of the sodium chloride-containing oral product at the time of ingestion.
[107] The method of any one of [93] to [106], wherein the aforementioned method further comprises adding γ-glutamyl peptide or a salt thereof, and the amount of β-caryophyllene oxide to be added is 30 to 70 ppb by weight with respect to the total weight of the sodium chloride-containing oral product at the time of ingestion.
[108] The method of any one of [93] to [107], wherein the aforementioned method further comprises adding γ-glutamyl peptide or a salt thereof, and the amount of γ-glutamyl peptide or a salt thereof to be added is 100 to 10000 ppb by weight with respect to the total weight of the sodium chloride-containing oral product at the time of ingestion.
[109] The method of any one of [93] to [108], wherein the aforementioned method further comprises adding γ-glutamyl peptide or a salt thereof, and the amount of γ-glutamyl peptide or a salt thereof to be added is 200 to 7000 ppb by weight with respect to the total weight of the sodium chloride-containing oral product at the time of ingestion.
[110] The method of any one of [93] to [109], wherein the aforementioned method further comprises adding γ-glutamyl peptide or a salt thereof, and the amount of γ-glutamyl peptide or a salt thereof to be added is 300 to 1200 ppb by weight with respect to the total weight of the sodium chloride-containing oral product at the time of ingestion.
[111] The method of any one of [93] to [110], wherein the aforementioned method further comprises adding γ-glutamyl peptide or a salt thereof, and the amount of γ-glutamyl peptide or a salt thereof to be added is 400 to 800 ppb by weight with respect to the total weight of the sodium chloride-containing oral product at the time of ingestion.
[112] The method of any one of [89] to [92], which is a method for suppressing an off-taste of an off-taste substance-containing oral product.
[113] The method of [112], wherein the off-taste substance-containing oral product is an off-taste substance-containing food or an off-taste substance-containing oral medicament.
[114] The method of [112] or [113], wherein the aforementioned off-taste substance comprises at least one substance selected from the group consisting of saltiness-substituting or - enhancing substance, amino acid or a salt thereof, a high-intensity sweetener, a plant-derived protein, an emulsifier, and a bacteriostatic agent.
[115] The method of any one of [112] to [114], wherein the aforementioned off-taste substance comprises at least one substance selected from the group consisting of potassium chloride, branched chain amino acid or a salt thereof, stevia, soybean protein, fatty acid monoglyceride, and sodium acetate.
[116] The method of any one of [112] to [115], which is a method for suppressing at least one off-taste selected from the group consisting of bitterness, a rough taste, a harsh taste, a metallic taste, and an astringent taste.
[117] The method of any one of [112] to [116], wherein the content of the off-taste substance in the off-taste substance-containing oral product is 0.01 to 10 wt% with respect to the total weight of the off-taste substance-containing oral product at the time of ingestion.
[118] The method of any one of [112] to [117], wherein the content of the off-taste substance in the off-taste substance-containing oral product is 0.03 to 5 wt% with respect to the total weight of the off-taste substance-containing oral product at the time of ingestion.
[119] The method of any one of [112] to [118], wherein the content of the off-taste substance in the off-taste substance-containing oral product is 0.05 to 3 wt% with respect to the total weight of the off-taste substance-containing oral product at the time of ingestion.
[120] The method of any one of [112] to [119], wherein the content of the off-taste substance in the off-taste substance-containing oral product is 0.1 to 1 wt% with respect to the total weight of the off-taste substance-containing oral product at the time of ingestion.
[121] The method of any one of [112] to [120], wherein the amount of β-caryophyllene oxide to be added is 30 to 50000 ppb by weight with respect to the total weight of the off-taste substance-containing oral product at the time of ingestion.
[122] The method of any one of [112] to [121], wherein the amount of β-caryophyllene oxide to be added is 80 to 30000 ppb by weight with respect to the total weight of the off-taste substance-containing oral product at the time of ingestion.
[123] The method of any one of [112] to [122], wherein the amount of β-caryophyllene oxide to be added is 100 to 20000 ppb by weight with respect to the total weight of the off-taste substance-containing oral product at the time of ingestion.
[124] The method of any one of [112] to [123], wherein the amount of β-caryophyllene oxide to be added is 300 to 15000 ppb by weight with respect to the total weight of the off-taste substance-containing oral product at the time of ingestion.
[125] The method of any one of [112] to [124], wherein the aforementioned method further comprises adding γ-glutamyl peptide or a salt thereof, and the amount of β-caryophyllene oxide to be added is 0.1 to 150 ppb by weight with respect to the total weight of the off-taste substance-containing oral product at the time of ingestion.
[126] The method of any one of [112] to [125], wherein the aforementioned method further comprises adding γ-glutamyl peptide or a salt thereof, and the amount of β-caryophyllene oxide to be added is 1 to 100 ppb by weight with respect to the total weight of the off-taste substance-containing oral product at the time of ingestion.
[127] The method of any one of [112] to [126], wherein the aforementioned method further comprises adding γ-glutamyl peptide or a salt thereof, and the amount of β-caryophyllene oxide to be added is 3 to 70 ppb by weight with respect to the total weight of the off-taste substance-containing oral product at the time of ingestion.
[128] The method of any one of [112] to [127], wherein the aforementioned method further comprises adding γ-glutamyl peptide or a salt thereof, and the amount of β-caryophyllene oxide to be added is 10 to 50 ppb by weight with respect to the total weight of the off-taste substance-containing oral product at the time of ingestion.
[129] The method of any one of [112] to [128], wherein the aforementioned method further comprises adding γ-glutamyl peptide or a salt thereof, and the amount of γ-glutamyl peptide or a salt thereof to be added is 100 to 30000 ppb by weight with respect to the total weight of the off-taste substance-containing oral product at the time of ingestion.
[130] The method of any one of [112] to [129], wherein the aforementioned method further comprises adding γ-glutamyl peptide or a salt thereof, and the amount of γ-glutamyl peptide or a salt thereof to be added is 500 to 25000 ppb by weight with respect to the total weight of the off-taste substance-containing oral product at the time of ingestion.
[131] The method of any one of [112] to [130], wherein the aforementioned method further comprises adding γ-glutamyl peptide or a salt thereof, and the amount of γ-glutamyl peptide or a salt thereof to be added is 1000 to 20000 ppb by weight with respect to the total weight of the off-taste substance-containing oral product at the time of ingestion.
[132] The method of any one of [112] to [131], wherein the aforementioned method further comprises adding γ-glutamyl peptide or a salt thereof, and the amount of γ-glutamyl peptide or a salt thereof to be added is 2800 to 15000 ppb by weight with respect to the total weight of the off-taste substance-containing oral product at the time of ingestion.
[133] An oral product comprising β-caryophyllene oxide, and sodium chloride or an off-taste substance.
[134] The oral product of [133], further comprising γ-glutamyl peptide or a salt thereof.
[135] The oral product of [134], wherein the γ-glutamyl peptide is γ-Glu-Val-Gly.
[136] The oral product of any one of [133] to [135], wherein the oral product is a food or an oral medicament.
[137] The oral product of any one of [133] to [136], wherein the oral product comprises sodium chloride.
[138] The oral product of [137], wherein the content of sodium chloride in the oral product is 0.01 wt% or more with respect to the total weight of the oral product at the time of ingestion.
[139] The oral product of [137] or [138], wherein the content of sodium chloride in the oral product is 0.01 to 15 wt% with respect to the total weight of the oral product at the time of ingestion.
[140] The oral product of any one of [137] to [139], wherein the content of sodium chloride in the oral product is 0.05 to 10 wt% with respect to the total weight of the oral product at the time of ingestion.
[141] The oral product of any one of [137] to [140], wherein the content of sodium chloride in the oral product is 0.1 to 5 wt% with respect to the total weight of the oral product at the time of ingestion.
[142] The oral product of any one of [137] to [141], wherein the content of sodium chloride in the oral product is 0.5 to 3 wt% with respect to the total weight of the oral product at the time of ingestion.
[143] The oral product of any one of [137] to [142], wherein the content of β-caryophyllene oxide in the oral product is 30 to 50000 ppb by weight with respect to the total weight of the oral product at the time of ingestion.
[144] The oral product of any one of [137] to [143], wherein the content of β-caryophyllene oxide in the oral product is 80 to 30000 ppb by weight with respect to the total weight of the oral product at the time of ingestion.
[145] The oral product of any one of [137] to [144], wherein the content of β-caryophyllene oxide in the oral product is 300 to 20000 ppb by weight with respect to the total weight of the oral product at the time of ingestion.
[146] The oral product of any one of [137] to [145], wherein the content of β-caryophyllene oxide in the oral product is 800 to 15000 ppb by weight with respect to the total weight of the oral product at the time of ingestion.
[147] The oral product of any one of [137] to [146], wherein the oral product further comprises γ-glutamyl peptide or a salt thereof, and the content of β-caryophyllene oxide in the oral product is 15 to 1500 ppb by weight with respect to the total weight of the oral product at the time of ingestion.
[148] The oral product of any one of [137] to [147], wherein the oral product further comprises γ-glutamyl peptide or a salt thereof, and the content of β-caryophyllene oxide in the oral product is 20 to 1200 ppb by weight with respect to the total weight of the oral product at the time of ingestion.
[149] The oral product of any one of [137] to [148], wherein the oral product further comprises γ-glutamyl peptide or a salt thereof, and the content of β-caryophyllene oxide in the oral product is 25 to 120 ppb by weight with respect to the total weight of the oral product at the time of ingestion.
[150] The oral product of any one of [137] to [149], wherein the oral product further comprises γ-glutamyl peptide or a salt thereof, and the content of β-caryophyllene oxide in the oral product is 30 to 70 ppb by weight with respect to the total weight of the oral product at the time of ingestion.
[151] The oral product of any one of [137] to [150], wherein the oral product further comprises γ-glutamyl peptide or a salt thereof, and the content of γ-glutamyl peptide or a salt thereof in the oral product is 100 to 10000 ppb by weight with respect to the total weight of the oral product at the time of ingestion.
[152] The oral product of any one of [137] to [151], wherein the oral product further comprises γ-glutamyl peptide or a salt thereof, and the content of γ-glutamyl peptide or a salt thereof in the oral product is 200 to 7000 ppb by weight with respect to the total weight of the oral product at the time of ingestion.
[153] The oral product of any one of [137] to [152], wherein the oral product further comprises γ-glutamyl peptide or a salt thereof, and the content of γ-glutamyl peptide or a salt thereof in the oral product is 300 to 1200 ppb by weight with respect to the total weight of the oral product at the time of ingestion.
[154] The oral product of any one of [137] to [153], wherein the oral product further comprises γ-glutamyl peptide or a salt thereof, and the content of γ-glutamyl peptide or a salt thereof in the oral product is 400 to 800 ppb by weight with respect to the total weight of the oral product at the time of ingestion.
[155] The oral product of any one of [133] to [136], comprising an off-taste substance.
[156] The oral product of [155], wherein the aforementioned off-taste substance comprises at least one substance selected from the group consisting of saltiness-substituting or - enhancing substance, amino acid or a salt thereof, a high-intensity sweetener, a plant-derived protein, an emulsifier, and a bacteriostatic agent.
[157] The oral product of [155] or [156], wherein the aforementioned off-taste substance comprises at least one substance selected from the group consisting of potassium chloride, branched chain amino acid or a salt thereof, stevia, soybean protein, fatty acid monoglyceride, and sodium acetate.
[158] The oral product of any one of [155] to [157], which is an oral product with a suppressed off-taste.
[159] The oral product of [158], wherein the aforementioned off-taste is at least one selected from the group consisting of bitterness, a rough taste, a harsh taste, a metallic taste, and an astringent taste.
[160] The oral product of any one of [155] to [159], wherein the content of the off-taste substance in the oral product is 0.01 to 10 wt% with respect to the total weight of the oral product at the time of ingestion.
[161] The oral product of any one of [155] to [160], wherein the content of the off-taste substance in the oral product is 0.03 to 5 wt% with respect to the total weight of the oral product at the time of ingestion.
[162] The oral product of any one of [155] to [161], wherein the content of the off-taste substance in the oral product is 0.05 to 3 wt% with respect to the total weight of the oral product at the time of ingestion.
[163] The oral product of any one of [155] to [162], wherein the content of the off-taste substance in the oral product is 0.1 to 1 wt% with respect to the total weight of the oral product at the time of ingestion.
[164] The oral product of any one of [155] to [163], wherein the content of β-caryophyllene oxide in the oral product is 30 to 50000 ppb by weight with respect to the total weight of the oral product at the time of ingestion.
[165] The oral product of any one of [155] to [164], wherein the content of β-caryophyllene oxide in the oral product is 80 to 30000 ppb by weight with respect to the total weight of the oral product at the time of ingestion.
[166] The oral product of any one of [155] to [165], wherein the content of β-caryophyllene oxide in the oral product is 100 to 20000 ppb by weight with respect to the total weight of the oral product at the time of ingestion.
[167] The oral product of any one of [155] to [166], wherein the content of β-caryophyllene oxide in the oral product is 300 to 15000 ppb by weight with respect to the total weight of the oral product at the time of ingestion.
[168] The oral product of any one of [155] to [167], wherein the oral product further comprises γ-glutamyl peptide or a salt thereof, and the content of β-caryophyllene oxide in the oral product is 0.1 to 150 ppb by weight with respect to the total weight of the oral product at the time of ingestion.
[169] The oral product of any one of [155] to [168], wherein the oral product further comprises γ-glutamyl peptide or a salt thereof, and the content of β-caryophyllene oxide in the oral product is 1 to 100 ppb by weight with respect to the total weight of the oral product at the time of ingestion.
[170] The oral product of any one of [155] to [169], wherein the oral product further comprises γ-glutamyl peptide or a salt thereof, and the content of β-caryophyllene oxide in the oral product is 3 to 70 ppb by weight with respect to the total weight of the oral product at the time of ingestion.
[171] The oral product of any one of [155] to [170], wherein the oral product further comprises γ-glutamyl peptide or a salt thereof, and the content of β-caryophyllene oxide in the oral product is 10 to 50 ppb by weight with respect to the total weight of the oral product at the time of ingestion.
[172] The oral product of any one of [155] to [171], wherein the oral product further comprises γ-glutamyl peptide or a salt thereof, and the content of γ-glutamyl peptide or a salt thereof in the oral product is 100 to 30000 ppb by weight with respect to the total weight of the oral product at the time of ingestion.
[173] The oral product of any one of [155] to [172], wherein the oral product further comprises γ-glutamyl peptide or a salt thereof, and the content of γ-glutamyl peptide or a salt thereof in the oral product is 500 to 25000 ppb by weight with respect to the total weight of the oral product at the time of ingestion.
[174] The oral product of any one of [155] to [173], wherein the oral product further comprises γ-glutamyl peptide or a salt thereof, and the content of γ-glutamyl peptide or a salt thereof in the oral product is 1000 to 20000 ppb by weight with respect to the total weight of the oral product at the time of ingestion.
[175] The oral product of any one of [155] to [174], wherein the oral product further comprises γ-glutamyl peptide or a salt thereof, and the content of γ-glutamyl peptide or a salt thereof in the oral product is 2800 to 15000 ppb by weight with respect to the total weight of the oral product at the time of ingestion.
[176] A composition comprising β-caryophyllene oxide, and γ-glutamyl peptide or a salt thereof.
[177] The composition of [176], wherein the γ-glutamyl peptide is γ-Glu-Val-Gly.
[178] The composition of [176] or [177], wherein the content of β-caryophyllene oxide is 0.1 to 99.9 wt% with respect to the aforementioned composition.
[179] The composition of any one of [176] to [178], wherein the content of β-caryophyllene oxide is 1 to 95 wt% with respect to the aforementioned composition.
[180] The composition of any one of [176] to [179], wherein the content of β-caryophyllene oxide is 10 to 90 wt% with respect to the aforementioned composition.
[181] The composition of any one of [176] to [180], wherein the content of γ-glutamyl peptide or a salt thereof is 0.01 to 99.9 wt% with respect to the aforementioned composition.
[182] The composition of any one of [176] to [181], wherein the content of γ-glutamyl peptide or a salt thereof is 0.1 to 95 wt% with respect to the aforementioned composition.
[183] The composition of any one of [176] to [182], wherein the content of γ-glutamyl peptide or a salt thereof is 1 to 90 wt% with respect to the aforementioned composition.
[184] The composition of any one of [176] to [183], wherein the content of γ-glutamyl peptide or a salt thereof is 10 to 85 wt% with respect to the aforementioned composition.
[185] The composition of any one of [176] to [184], which is for a sodium chloride-containing oral product.
[186] The composition of [185], wherein the sodium chloride-containing oral product is a sodium chloride-containing food or a sodium chloride-containing oral medicament.
[187] The composition of [185] or [186], wherein the content of sodium chloride in the sodium chloride-containing oral product is 0.01 wt% or more with respect to the total weight of the sodium chloride-containing oral product at the time of ingestion.
[188] The composition of any one of [185] to [187], wherein the content of sodium chloride in the sodium chloride-containing oral product is 0.01 to 15 wt% with respect to the total weight of the sodium chloride-containing oral product at the time of ingestion.
[189] The composition of any one of [185] to [188], wherein the content of sodium chloride in the sodium chloride-containing oral product is 0.05 to 10 wt% with respect to the total weight of the sodium chloride-containing oral product at the time of ingestion.
[190] The composition of any one of [185] to [189], wherein the content of sodium chloride in the sodium chloride-containing oral product is 0.1 to 5 wt% with respect to the total weight of the sodium chloride-containing oral product at the time of ingestion.
[191] The composition of any one of [185] to [190], wherein the content of sodium chloride in the sodium chloride-containing oral product is 0.5 to 3 wt% with respect to the total weight of the sodium chloride-containing oral product at the time of ingestion.
[192] The composition of any one of [185] to [191], which is to be added to the sodium chloride-containing oral product such that the amount of β-caryophyllene oxide to be added to the sodium chloride-containing oral product is 30 to 50000 ppb by weight with respect to the total weight of the sodium chloride-containing oral product at the time of ingestion.
[193] The composition of any one of [185] to [192], which is to be added to the sodium chloride-containing oral product such that the amount of β-caryophyllene oxide to be added to the sodium chloride-containing oral product is 80 to 30000 ppb by weight with respect to the total weight of the sodium chloride-containing oral product at the time of ingestion.
[194] The composition of any one of [185] to [193], which is to be added to the sodium chloride-containing oral product such that the amount of β-caryophyllene oxide to be added to the sodium chloride-containing oral product is 300 to 20000 ppb by weight with respect to the total weight of the sodium chloride-containing oral product at the time of ingestion.
[195] The composition of any one of [185] to [194], which is to be added to the sodium chloride-containing oral product such that the amount of β-caryophyllene oxide to be added to the sodium chloride-containing oral product is 800 to 15000 ppb by weight with respect to the total weight of the sodium chloride-containing oral product at the time of ingestion.
[196] The composition of any one of [185] to [195], which is to be added to the sodium chloride-containing oral product such that the amount of β-caryophyllene oxide to be added to the sodium chloride-containing oral product is 15 to 1500 ppb by weight with respect to the total weight of the sodium chloride-containing oral product at the time of ingestion.
[197] The composition of any one of [185] to [196], which is to be added to the sodium chloride-containing oral product such that the amount of β-caryophyllene oxide to be added to the sodium chloride-containing oral product is 20 to 1200 ppb by weight with respect to the total weight of the sodium chloride-containing oral product at the time of ingestion.
[198] The composition of any one of [185] to [197], which is to be added to the sodium chloride-containing oral product such that the amount of β-caryophyllene oxide to be added to the sodium chloride-containing oral product is 25 to 120 ppb by weight with respect to the total weight of the sodium chloride-containing oral product at the time of ingestion.
[199] The composition of any one of [185] to [198], which is to be added to the sodium chloride-containing oral product such that the amount of β-caryophyllene oxide to be added to the sodium chloride-containing oral product is 30 to 70 ppb by weight with respect to the total weight of the sodium chloride-containing oral product at the time of ingestion.
[200] The composition of any one of [185] to [199], which is to be added to the sodium chloride-containing oral product such that the amount of γ-glutamyl peptide or a salt thereof to be added to the sodium chloride-containing oral product is 100 to 10000 ppb by weight with respect to the total weight of the sodium chloride-containing oral product at the time of ingestion.
[201] The composition of any one of [185] to [200], which is to be added to the sodium chloride-containing oral product such that the amount of γ-glutamyl peptide or a salt thereof to be added to the sodium chloride-containing oral product is 200 to 7000 ppb by weight with respect to the total weight of the sodium chloride-containing oral product at the time of ingestion.
[202] The composition of any one of [185] to [201], which is to be added to the sodium chloride-containing oral product such that the amount of γ-glutamyl peptide or a salt thereof to be added to the sodium chloride-containing oral product is 300 to 1200 ppb by weight with respect to the total weight of the sodium chloride-containing oral product at the time of ingestion.
[203] The composition of any one of [185] to [202], which is to be added to the sodium chloride-containing oral product such that the amount of γ-glutamyl peptide or a salt thereof to be added to the sodium chloride-containing oral product is 400 to 800 ppb by weight with respect to the total weight of the sodium chloride-containing oral product at the time of ingestion.
[204] The composition of any one of [176] to [184], which is for an off-taste substance-containing oral product.
[205] The composition of [204], wherein the off-taste substance-containing oral product is an off-taste substance-containing food or an off-taste substance-containing oral medicament.
[206] The composition of [204] or [205], wherein the aforementioned off-taste substance comprises at least one substance selected from the group consisting of saltiness-substituting or -enhancing substance, amino acid or a salt thereof, a high-intensity sweetener, a plant-derived protein, an emulsifier, and a bacteriostatic agent.
[207] The composition of any one of [204] to [206], wherein the aforementioned off-taste substance comprises at least one substance selected from the group consisting of potassium chloride, branched chain amino acid or a salt thereof, stevia, soybean protein, fatty acid monoglyceride, and sodium acetate.
[208] The composition of any one of [204] to [207], wherein the content of the off-taste substance in the off-taste substance-containing oral product is 0.01 to 10 wt% with respect to the total weight of the off-taste substance-containing oral product at the time of ingestion.
[209] The composition of any one of [204] to [208], wherein the content of the off-taste substance in the off-taste substance-containing oral product is 0.03 to 5 wt% with respect to the total weight of the off-taste substance-containing oral product at the time of ingestion.
[210] The composition of any one of [204] to [209], wherein the content of the off-taste substance in the off-taste substance-containing oral product is 0.05 to 3 wt% with respect to the total weight of the off-taste substance-containing oral product at the time of ingestion.
[211] The composition of any one of [204] to [210], wherein the content of the off-taste substance in the off-taste substance-containing oral product is 0.1 to 1 wt% with respect to the total weight of the off-taste substance-containing oral product at the time of ingestion.
[212] The composition of any one of [204] to [211], which is to be added to the off-taste substance-containing oral product such that the amount of β-caryophyllene oxide to be added to the off-taste substance-containing oral product is 30 to 50000 ppb by weight with respect to the total weight of the off-taste substance-containing oral product at the time of ingestion.
[213] The composition of any one of [204] to [212], which is to be added to the off-taste substance-containing oral product such that the amount of β-caryophyllene oxide to be added to the off-taste substance-containing oral product is 80 to 30000 ppb by weight with respect to the total weight of the off-taste substance-containing oral product at the time of ingestion.
[214] The composition of any one of [204] to [213], which is to be added to the off-taste substance-containing oral product such that the amount of β-caryophyllene oxide to be added to the off-taste substance-containing oral product is 100 to 20000 ppb by weight with respect to the total weight of the off-taste substance-containing oral product at the time of ingestion.
[215] The composition of any one of [204] to [214], which is to be added to the off-taste substance-containing oral product such that the amount of β-caryophyllene oxide to be added to the off-taste substance-containing oral product is 300 to 15000 ppb by weight with respect to the total weight of the off-taste substance-containing oral product at the time of ingestion.
[216] The composition of any one of [204] to [215], which is to be added to the off-taste substance-containing oral product such that the amount of β-caryophyllene oxide to be added to the off-taste substance-containing oral product is 0.1 to 150 ppb by weight with respect to the total weight of the off-taste substance-containing oral product at the time of ingestion.
[217] The composition of any one of [204] to [216], which is to be added to the off-taste substance-containing oral product such that the amount of β-caryophyllene oxide to be added to the off-taste substance-containing oral product is 1 to 100 ppb by weight with respect to the total weight of the off-taste substance-containing oral product at the time of ingestion.
[218] The composition of any one of [204] to [217], which is to be added to the off-taste substance-containing oral product such that the amount of β-caryophyllene oxide to be added to the off-taste substance-containing oral product is 3 to 70 ppb by weight with respect to the total weight of the off-taste substance-containing oral product at the time of ingestion.
[219] The composition of any one of [204] to [218], which is to be added to the off-taste substance-containing oral product such that the amount of β-caryophyllene oxide to be added to the off-taste substance-containing oral product is 10 to 50 ppb by weight with respect to the total weight of the off-taste substance-containing oral product at the time of ingestion.
[220] The composition of any one of [204] to [219], which is to be added to the off-taste substance-containing oral product such that the amount of γ-glutamyl peptide or a salt thereof to be added to the off-taste substance-containing oral product is 100 to 30000 ppb by weight with respect to the total weight of the off-taste substance-containing oral product at the time of ingestion.
[221] The composition of any one of [204] to [220], which is to be added to the off-taste substance-containing oral product such that the amount of γ-glutamyl peptide or a salt thereof to be added to the off-taste substance-containing oral product is 500 to 25000 ppb by weight with respect to the total weight of the off-taste substance-containing oral product at the time of ingestion.
[222] The composition of any one of [204] to [221], which is to be added to the off-taste substance-containing oral product such that the amount of γ-glutamyl peptide or a salt thereof to be added to the off-taste substance-containing oral product is 1000 to 20000 ppb by weight with respect to the total weight of the off-taste substance-containing oral product at the time of ingestion.
[223] The composition of any one of [204] to [222], which is to be added to the off-taste substance-containing oral product such that the amount of γ-glutamyl peptide or a salt thereof to be added to the off-taste substance-containing oral product is 2800 to 15000 ppb by weight with respect to the total weight of the off-taste substance-containing oral product at the time of ingestion.

### [Advantageous Effects of Invention]

According to the present invention, an agent for enhancing saltiness is provided. The agent of the present invention can enhance the saltiness of a sodium chloride-containing oral product (e.g., sodium chloride-containing food, sodium chloride-containing oral medicament, etc.) without imparting a smell to the oral product.

In addition, according to the present invention, an oral product with an enhanced saltiness and a production method thereof are provided. The production method of the present invention can produce a sodium chloride-containing oral product (e.g., sodium chloride-containing food, sodium chloride-containing oral medicament, etc.) with an enhanced saltiness, without imparting a smell.

In addition, according to the present invention, a method for enhancing the saltiness is provided. The method of the present invention can enhance the saltiness of a sodium chloride-containing oral product (e.g., sodium chloride-containing food, sodium chloride-containing oral medicament, etc.) without imparting a smell to the oral product.

In addition, according to the present invention, an agent for suppressing an off-taste is provided. The agent of the present invention can suppress the off-taste of an off-taste substance-containing oral product (e.g., off-taste substance-containing food, off-taste substance-containing oral medicament, etc.) without imparting a smell to the oral product.

In addition, according to the present invention, an oral product with a suppressed off-taste and a production method thereof are provided. The production method of the present invention can produce an off-taste substance-containing oral product (e.g., off-taste substance-containing food, off-taste substance-containing oral medicament, etc.) with a suppressed off-taste, without imparting a smell.

In addition, according to the present invention, a method for suppressing an off-taste is provided. The method of the present invention can suppress an off-taste of an off-taste substance-containing oral product (e.g., off-taste substance-containing food, off-taste substance-containing oral medicament, etc.) without imparting a smell to the oral product.

### [Description of Embodiments]

### (The agent of the present invention)

One of the characteristics of the agent for enhancing saltiness or suppressing an off-taste of the present invention (sometimes to be referred to simply as "the agent of the present invention" in the present specification) is that it contains β-caryophyllene oxide as an active ingredient.

β-Caryophyllene oxide is a compound represented by the following formula and has a CAS Registry Number 1139-30-6.

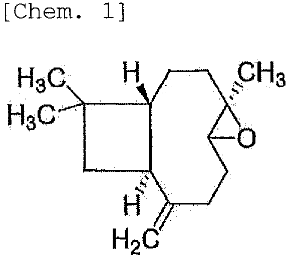

The method for producing β-caryophyllene oxide to be used in the present invention is not particularly limited, and β-caryophyllene oxide may be produced by a method known per se (e.g., chemical synthesis method, enzyme method, fermentation method, extraction method, etc.) or a method analogous thereto. A commercially available β-caryophyllene oxide may also be used.

One embodiment of β-caryophyllene oxide to be used in the present invention may be a chemically synthesized product produced by a chemical synthesis method or an isolated product obtained by extraction and purification from a material containing β-caryophyllene oxide. Examples of the material containing β-caryophyllene oxide include naturally occurring substances such as agricultural/livestock/aquatic products or the like (e.g., pepper, basil, hop, clove, oregano, cinnamon, ylang-ylang, etc.); fermentation products such as culture medium, bacterial cells or the like obtained by culturing microorganisms; and processed products thereof, and the like.

In the present invention, a material containing β-caryophyllene oxide may be used as it is or purified to a desired degree and used in place of a chemically synthesized product or isolated product of β-caryophyllene oxide, or in addition to the chemically synthesized product or isolated product. The content of β-caryophyllene oxide in the material can be measured by gas chromatography-mass spectrometry (GC-MS).

The agent of the present invention may further contain, in one embodiment, γ-glutamyl peptide or a salt thereof in addition to β-caryophyllene oxide. By further containing γ-glutamyl peptide or a salt thereof in addition to β-caryophyllene oxide, the agent of the present invention can more effectively suppress the off-taste of an off-taste substance-containing oral product.

In the present invention, the "γ-glutamyl peptide" refers to a peptide having a γ-glutamyl structure (e.g., γ-glutamyl dipeptide, γ-glutamyl tripeptide, γ-glutamyl tetrapeptide, γ-glutamyl pentapeptide, etc.).

Examples of the γ-glutamyl peptide that can be used in the present invention include a compound represented by the following formula (I) (sometimes to be referred to as "compound (I)" in the present specification), a compound represented by the following formula (II) (sometimes to be referred to as "compound (II)" in the present specification) and the like:

γ-Glu-X-Gly (I)

wherein X is an amino acid or an amino acid derivative γ-Glu-Y (II)
wherein Y is an amino acid or an amino acid derivative.

In the present invention, compound (I) is a tripeptide composed of glutamic acid (Glu), X (amino acid or amino acid derivative) and glycine (Gly) and having a γ-glutamyl structure (i.e., a structure in which the carboxyl group at the γ-position of glutamic acid and the amino group of X are peptide-bonded).

Compound (II) is a dipeptide composed of glutamic acid (Glu) and Y (amino acid or amino acid derivative) and having a γ-glutamyl structure (i.e., a structure in which the carboxyl group at the γ-position of glutamic acid and the amino group of Y are peptide-bonded).

Examples of the "amino acid" represented by X in the formula (I) and Y in the formula (II) include neutral amino acids such as glycine, alanine, valine, leucine, isoleucine, serine, threonine, cysteine, methionine, asparagine, glutamine, proline or the like; acidic amino acids such as aspartic acid, glutamic acid or the like; basic amino acids such as lysine, arginine, histidine or the like; aromatic amino acids such as phenylalanine, tyrosine, tryptophan or the like; other amino acids such as ornithine, sarcosine, citrulline, norvaline, norleucine, α-aminobutyric acid, taurine, hydroxyproline, tert-leucine, cycloleucine, α-aminoisobutyric acid (2-methylalanine), penicillamine, homoserine or the like; and the like. These amino acids are preferably in L-form.

In the present specification, the aforementioned amino acids are sometimes each abbreviated as follows.
(1) glycine: Gly
(2) alanine: Ala
(3) valine: Val
(4) leucine: Leu
(5) isoleucine: Ile
(6) serine: Ser
(7) threonine: Thr
(8) cysteine: Cys
(9) methionine: Met
(10) asparagine: Asn
(11) glutamine: Gln
(12) proline: Pro
(13) aspartic acid: Asp
(14) glutamic acid: Glu
(15) lysine: Lys
(16) arginine: Arg
(17) histidine: His
(18) phenylalanine: Phe
(19) tyrosine: Tyr
(20) tryptophan: Trp
(21) ornithine: Orn
(22) sarcosine: Sar
(23) citrulline: Cit
(24) norvaline: Nva
(25) norleucine: Nle
(26) α-aminobutyric acid: Abu
(27) taurine: Tau
(28) hydroxyproline: Hyp
(29) tert-leucine: t-Leu
(30) cycloleucine: Cle
(31) α-aminoisobutyric acid (2-methylalanine): Aib
(32) penicillamine: Pen
(33) homo serine: Hse

Examples of the "amino acid derivative" represented by X in the formula (I) and Y in the formula (II) include special amino acids, unnatural amino acids, amino alcohols, and amino acids in which at least one functional group (e.g., terminal carbonyl group, terminal amino group, thiol group of cysteine, etc.) is substituted by a substituent (e.g., alkyl group, acyl group, hydroxyl group, amino group, alkylamino group, nitro group, sulfonyl group, various protecting groups, etc.). Specific examples of the amino acid derivative include N-γ-nitroarginine (sometimes to be abbreviated as "Arg(NO₂)" in the present specification), S-nitrocysteine (sometimes to be abbreviated as "Cys(SNO)" in the present specification), S-methylcysteine (sometimes to be abbreviated as "Cys(S-Me)" in the present specification), S-allylcysteine (sometimes to be abbreviated as "Cys(S-allyl)" in the present specification), valine amide (sometimes to be abbreviated as "Val-NH₂" in the present specification), Valinol (2-amino-3-methyl-1-butanol) (sometimes to be abbreviated as "Val-ol" in the present specification), methionine sulfoxide (sometimes to be abbreviated as "Met(O)" in the present specification), S-methylcysteine sulfoxide (sometimes to be abbreviated as "Cys(S-Me)(O)" in the present specification) and the like. These amino acids are preferably in L-form.

X in the formula (I) is preferably an amino acid, more preferably Val, Abu or Nva.

Y in the formula (II) is preferably an amino acid, more preferably Abu or Nva.

Compound (I) that can be used in the present invention is preferably γ-Glu-Val-Gly, γ-Glu-Abu-Gly, or γ-Glu-Nva-Gly.

Compound (II) that can be used in the present invention is preferably γ-Glu-Abu or γ-Glu-Nva.

The γ-glutamyl peptide that can be used in the present invention is preferably γ-Glu-Val-Gly, γ-Glu-Abu-Gly, γ-Glu-Nva-Gly, γ-Glu-Abu, γ-Glu-Nva, more preferably γ-Glu-Val-Gly, γ-Glu-Abu-Gly, γ-Glu-Abu, particularly preferably γ-Glu-Val-Gly. γ-Glu-Val-Gly (CAS Registry Number: 38837-70-6) is also generally referred to as "Glutamyl-Valyl-Glycine".

The salt of γ-glutamyl peptide to be used in the present invention is not particularly limited as long as it is an edible salt (that is, orally ingestible salt). Examples of the salts with acidic groups such as carboxyl group or the like include salts with alkali metals such as sodium, potassium or the like; salts with alkaline earth metals such as calcium, magnesium or the like; ammonium salt; aluminum salt; zinc salt; salts with organic amines such as triethylamine, ethanolamine, morpholine, pyrrolidine, piperidine, piperazine, dicyclohexylamine or the like; salts with basic amino acids such as arginine, lysine or the like. Examples of the salts with basic groups such as amino group or the like include salts with inorganic acids such as hydrochloric acid, sulfuric acid, phosphoric acid, nitric acid, hydrobromic acid or the like; salts with organic carboxylic acids such as acetic acid, citric acid, benzoic acid, maleic acid, fumaric acid, tartaric acid, succinic acid, tannic acid, butyric acid, hybenzic acid, pamoic acid, enanthic acid, decanoic acid, teoclic acid, salicylic acid, lactic acid, oxalic acid, mandelic acid, malic acid, methylmalonic acid, adipic acid or the like; and salts with organic sulfonic acids such as methanesulfonic acid, benzenesulfonic acid, p-toluenesulfonic acid or the like. These salts may be hydrates (hydrate salts) and examples of such hydrate include 1 to 6 hydrates and the like.

In the present invention, any one kind of γ-glutamyl peptide or a salt thereof may be used alone, or two or more kinds may be used in combination.

The production method of γ-glutamyl peptide or a salt thereof to be used in the present invention is not particularly limited, and one produced by a method known per se (e.g., chemical synthetic method, enzyme method, fermentation method, etc.) or a method analogous thereto may be used. Specifically, for example, γ-glutamyl peptide or a salt thereof can be produced by the method described in WO 2004/011653, JP 2012-213376 A or JP 2016-168045 A, or a method analogous thereto or the like. A commercially available product may also be used as γ-glutamyl peptide or a salt thereof.

The γ-glutamyl peptide or a salt thereof that can be used in the present invention may or may not be a purified product. That is, a material containing γ-glutamyl peptide or a salt thereof may be used in the present invention. In the present invention, the use of γ-glutamyl peptide or a salt thereof includes not only the use of γ-glutamyl peptide or a salt thereof itself, but also the use of a material containing γ-glutamyl peptide or a salt thereof, and the combined use of γ-glutamyl peptide or a salt thereof itself and a material containing γ-glutamyl peptide or a salt thereof. The content of γ-glutamyl peptide or a salt thereof in a material containing γ-glutamyl peptide or a salt thereof is preferably 100 ppm by weight or more relative to the material. Examples of the material containing γ-glutamyl peptide or a salt thereof include fermentation products containing γ-glutamyl peptide or a salt thereof (e.g., culture medium, bacterial cells, culture supernatant, etc. obtained by culturing a microorganism capable of producing γ-glutamyl peptide), agricultural/aquatic/livestock products containing γ-glutamyl peptide or a salt thereof, and processed products thereof, and the like. Examples of such processed products include fermentation products containing γ-glutamyl peptide or a salt thereof that have been subjected to treatments such as concentration, dilution, drying, fractionation, extraction, purification or the like, and the like. Specific examples of the processed product include yeast containing γ-glutamyl peptide and yeast extract containing γ-glutamyl peptide (e.g., yeast and yeast extract described in JP 2012-213376 A) and the like. The material containing γ-glutamyl peptide or a salt thereof may be purified to a desired degree, and the purity of the material to be used is preferably preferably 50 wt% or more, more preferably 70 wt% or more, further preferably 90 wt% or more, particularly preferably 95 wt% or more.

The content of β-caryophyllene oxide in the agent of the present invention is generally 0.01 wt% or more, preferably 0.1 wt% or more, more preferably 1 wt% or more, particularly preferably 10 wt% or more, with respect to the agent of the present invention. The content of β-caryophyllene oxide in the agent of the present invention is generally 100 wt% or less, preferably 99.9 wt% or less, more preferably 95 wt% or less, particularly preferably 90 wt% or less, with respect to the agent of the present invention. For example, the content of β-caryophyllene oxide in the agent of the present invention is generally 0.01 to 100 wt%, preferably 0.1 to 99.9 wt%, more preferably 1 to 95 wt%, particularly preferably 10 to 90 wt%, with respect to the agent of the present invention.

When the agent of the present invention contains γ-glutamyl peptide or a salt thereof, the content of γ-glutamyl peptide or a salt thereof in the agent of the present invention is generally 0.01 wt% or more, preferably 0.1 wt% or more, more preferably 1 wt% or more, particularly preferably 10 wt% or more, with respect to the agent of the present invention. The content of γ-glutamyl peptide or a salt thereof, the content of γ-glutamyl peptide or a salt thereof in the agent of the present invention is generally 99.9 wt% or less, preferably 95 wt% or less, more preferably 90 wt% or less, particularly preferably 85 wt% or less, with respect to the agent of the present invention. For example, the content of γ-glutamyl peptide or a salt thereof in the agent of the present invention is generally 0.01 to 99.9 wt%, preferably 0.1 to 95 wt%, more preferably 1 to 90 wt%, particularly preferably 10 to 85 wt%, with respect to the agent of the present invention.

In the present specification, the amount of a salt of γ-glutamyl peptide is a value converted to γ-glutamyl peptide (free form).

The form of the agent of the present invention is not particularly limited and, for example, solid (including powder, granular and the like), liquid (including slurry and the like), gel, paste and the like can be mentioned.

The agent of the present invention may consist only of β-caryophyllene oxide, or may consist only of β-caryophyllene oxide and γ-glutamyl peptide or a salt thereof. It may further contain a conventional base in accordance with the form, and the like of the agent of the present invention, in addition to β-caryophyllene oxide, and γ-glutamyl peptide or a salt thereof.

Examples of the base when the agent of the present invention is in a liquid form include water, ethanol, glycerin, propylene glycol, various animal or vegetable oils and the like.

Examples of the base when the agent of the present invention is in a solid form include starch, dextrin, cyclodextrin, various saccharides such as sucrose, glucose or the like, protein, peptide, salt, solid fat, silicon dioxide, and a mixture thereof, yeast fungus, various powder extracts and the like.

The agent of the present invention may further contain, in addition to β-caryophyllene oxide, γ-glutamyl peptide or a salt thereof, for example, excipient, pH adjuster, antioxidant, thickening stabilizer, sweetener (e.g., sugars, etc.), acidulant, spice, colorant and the like as long as the purpose of the present invention is not impaired.

The agent of the present invention can be produced by a method conventionally used in the fields of food additives and pharmaceutical additives. The agent of the present invention may be subjected to, for example, a concentration treatment, a drying treatment, a decolorization treatment and the like alone or combination.

The agent of the present invention is preferably used to enhance saltiness or suppress an off-taste. The agent of the present invention may be, in one embodiment, an agent for enhancing saltiness or, in another embodiment, an agent for suppressing an off-taste. In the present invention, "an agent for enhancing saltiness" and "an agent for suppressing an off-taste" are concepts respectively encompassing "a composition for enhancing saltiness" and "a composition for suppressing an off-taste".

In one embodiment, the agent of the present invention is preferably used to enhance the saltiness of a sodium chloride-containing oral product (e.g., sodium chloride-containing food, sodium chloride-containing oral medicament, etc.). Thus, in one embodiment, the agent of the present invention may be an agent for enhancing the saltiness of a sodium chloride-containing oral product. The agent of the present invention can enhance the saltiness of the sodium chloride-containing oral product without imparting a smell to the oral product. The presence or absence and the degree of the smell of the oral product can be evaluated by a sensory evaluation by an expert panel (e.g., sensory evaluation, etc. shown in Examples described later).

In the present invention, the "sodium chloride-containing oral product" refers to an oral product that essentially contains sodium chloride. As used herein, the "oral product" in the sodium chloride-containing oral product and the like means substances that can be ingested orally, and specific examples include foods, oral medicaments and the like. Therefore, the sodium chloride-containing oral product may be, for example, a sodium chloride-containing food, a sodium chloride-containing oral medicament or the like. As used herein, the "ingestion" is a concept that encompasses all of intake, eating, drinking, taking, and the like. In the present invention, the "food" broadly encompasses anything that can be taken orally (excluding medicaments). Unless otherwise specified, it encompasses not only so-called foods, but also beverages, seasonings, supplements, and the like. The food is a concept also encompassing food compositions.

In the present invention, the "enhancement" of saltiness means that the saltiness is strongly felt as if the sodium chloride concentration was increased. The presence or absence and the degree of saltiness can be evaluated by a sensory evaluation by an expert panel (e.g., sensory evaluation, etc. shown in Examples described later).

The sodium chloride-containing food for which the agent of the present invention can be used is not particularly limited as long as it contains sodium chloride and can be ingested orally. A sodium chloride-containing food desired to have an enhanced saltiness is preferred. For example, soup (including dried soup) such as corn soup, consomme soup (e.g., chicken, pork, beef, etc.), potage, soup with egg, soup with Wakame seaweed, soup with shark fin, Chinese-style soup, curry flavor soup, Ramen noodle soup, Japanese-style clear soup, Miso soup or the like; meat processed food such as ham, sausage, Gyoza dumpling, Shumai dumpling, hamburg steak, meatball, deep-fried food, pork cutlet or the like; aquatic processed food such as steamed fish paste cake, tube shaped fish paste cake or the like; dairy product such as butter, fresh cream or the like; rice processed food such as Chinese fried rice or the like; seasoning such as savory seasoning, flavor seasoning, menu seasoning, mayonnaise, dressing, sauce (e.g., demi-glace sauce, Japanese Worcestershire-style sauce, white sauce, cheese sauce, carbonara sauce, etc.) or the like; other processed food such as noodles, breads, gratin, croquette, pickles or the like; frozen food (frozen products of the aforementioned foods (e.g., Gyoza dumpling, Shumai dumpling, Chinese fried rice, hamburg steak, deep-fried food, gratin, pork cutlet, croquette, etc.), etc.); beverages such as soft drinks, carbonated drinks, powdered drinks (e.g., coffee drinks, tea drinks, etc.), alcoholic drinks or the like, and the like can be mentioned.

In the present specification, the "savory seasoning" refers to a seasoning produced from a natural substance as a material and by a method such as extraction, decomposition, heating, fermentation, and the like. Concrete examples thereof include various meat extracts such as chicken meat extract, beef meat extract, pork meat extract, sheep meat extract or the like; various bone extracts such as chicken bone extract, beef bone extract, pork bone extract or the like; various seafood extracts such as bonito extract, mackerel extract, croaker extract, scallop extract, crab extract, shrimp extract, dried sardine extract, dried adductor extract or the like; various dried fish extracts such as dried bonito extract, dried mackerel extract, dried bullet mackerel extract or the like; various vegetable extracts such as onion extract, Chinese cabbage extract, celery extract or the like; various seaweed extracts such as kelp extract or the like; various spice extracts such as garlic extract, chili extract, pepper extract, cacao extract or the like; yeast extracts; various protein hydrolysate; various fermentation seasonings such as soy sauce, fish sauce, shrimp sauce, Miso or the like, and the like and mixtures thereof, processed product (e.g., soy sauce processed product such as Japanese noodle soup base, citrus seasoned soy sauce or the like), and the like. The "flavor seasoning" refers to a seasoning used to impart aroma, flavor and taste of a flavor material to a food, and can be produced by, for example, adding sugar, salt and the like to a savory seasoning, or the like. Specific examples of the flavor seasoning include various meat flavor seasonings such as chicken flavor seasoning, beef flavor seasoning, pork flavor seasoning or the like; various seafood flavor seasonings such as bonito flavor seasoning, dried sardine flavor seasoning, dried adductor flavor seasoning, crustacean flavor seasoning or the like; various spicy vegetable flavor seasonings; kelp flavor seasoning and the like. The "menu seasoning" refers to a seasoning suitable for cooking a particular menu (Chinese-style menu, etc.). Concrete examples thereof include Chinese-style combined seasoning, combined seasoning, generic paste seasoning, seasoning for hot pot, seasoning mix for cooked rice mixed with ingredients, seasoning mix for Chinese fried rice, spice mix and the like.

The sodium chloride-containing food for which the agent of the present invention can be used may be provided (sold, distributed) in a form suitable for ingestion, or may be provided in a form that requires a predetermined processing or cooking to have a form suitable for ingestion. For example, the sodium chloride-containing food to which the agent of the present invention can be added may be provided (sold, distributed) as a concentrate or the like that requires diluting with water, etc. to become a form suitable for ingestion.

The sodium chloride-containing food for which the agent of the present invention can be used may be provided, for example, as a food with health claims, a food for specified health uses, a food with nutrient function claims, a dietary supplement, a nutritional supplementary food, a health supplementary food, a food for medical use, a medical food or the like.

The sodium chloride-containing food for which the agent of the present invention can be used also includes sodium chloride itself. That is, the agent of the present invention may be used for sodium chloride itself.

The form of the sodium chloride-containing oral medicament for which the agent of the present invention can be used is not particularly limited, and specific examples thereof include tablet, granule, powder, capsule (including soft capsule), elixir, syrup, microcapsule, drink, emulsion, suspension, and the like.

The content of sodium chloride (sodium chloride concentration) in the sodium chloride-containing oral products (e.g., sodium chloride-containing food, sodium chloride-containing oral medicament, etc.) for which the agent of the present invention can be used is not particularly limited and is generally 0.01 wt% or more, and because the saltiness can be enhanced effectively, it is preferably 0.05 wt% or more, more preferably 0.1 wt% or more, particularly preferably 0.5 wt% or more, with respect to the total weight of the sodium chloride-containing oral product at the time of ingestion (e.g., at the time of eating, when it is taken, etc.). The upper limit of the content of sodium chloride (sodium chloride concentration) in the sodium chloride-containing oral products for which the agent of the present invention can be used is not particularly limited and may be 100 wt%. It is preferably 15 wt% or less, more preferably 10 wt% or less, further preferably 5 wt% or less, particularly preferably 3 wt% or less, with respect to the total weight of the sodium chloride-containing oral product at the time of ingestion.

The production method of sodium chloride contained in the sodium chloride-containing oral product is not particularly limited, and one produced by a method known per se or a method analogous thereto may be used. The sodium chloride may also be a commercially available product.

The components of the sodium chloride-containing oral product other than sodium chloride are not particularly limited as long as they do not impair the object of the present invention, and the sodium chloride-containing oral product for which the agent of the present invention can be used may contain, in addition to sodium chloride, any materials and additives depending on the kind of the oral product and the like. In one embodiment, the sodium chloride-containing oral product for which the agent of the present invention can be used may contain, in addition to sodium chloride, an off-taste substance described below.

The method and conditions for adding the agent of the present invention to the sodium chloride-containing oral product are not particularly limited, and can be appropriately set depending on the form of the agent of the present invention, the kind of the sodium chloride-containing oral product, and the like. The timing of addition of the agent of the present invention to the sodium chloride-containing oral product is not particularly limited, and it may be added at any time. For example, during production of the sodium chloride-containing oral product, after completion of the sodium chloride-containing oral product (e.g., immediately before ingestion of the sodium chloride-containing oral product, during ingestion of the sodium chloride-containing oral product, etc.) and the like can be mentioned. The agent of the present invention may be added to a raw material before producing a sodium chloride-containing oral product.

Since the agent of the present invention can effectively enhance saltiness, the agent of the present invention is preferably added to a sodium chloride-containing oral product such that an amount of β-caryophyllene oxide to be added to the sodium chloride-containing oral product (e.g., sodium chloride-containing food, sodium chloride-containing oral medicament, etc.) falls within a particular range with respect to the total weight of the sodium chloride-containing oral product at the time of ingestion (e.g., at the time of eating, when it is taken, etc.). Specifically, the amount of β-caryophyllene oxide to be added to the sodium chloride-containing oral product is preferably 30 ppb by weight or more, more preferably 80 ppb by weight or more, further preferably 300 ppb by weight or more, particularly preferably 800 ppb by weight or more, with respect to the total weight of the sodium chloride-containing oral product at the time of ingestion. In addition, the amount of β-caryophyllene oxide to be added to the sodium chloride-containing oral product is preferably 50000 ppb by weight or less, more preferably 30000 ppb by weight or less, further preferably 20000 ppb by weight or less, particularly preferably 15000 ppb by weight or less, with respect to the total weight of the sodium chloride-containing oral product at the time of ingestion.

When the agent of the present invention contains γ-glutamyl peptide or a salt thereof, the amount of β-caryophyllene oxide to be added to the sodium chloride-containing oral product is preferably 15 ppb by weight or more, more preferably 20 ppb by weight or more, further preferably 25 ppb by weight or more, particularly preferably 30 ppb by weight or more, with respect to the total weight of the sodium chloride-containing oral product at the time of ingestion, from the aspect of effective enhancement of the saltiness of the sodium chloride-containing oral product. In this case, the upper limit is not set on the amount of β-caryophyllene oxide to be added to the sodium chloride-containing oral product as long as a smell derived from β-caryophyllene oxide is not imparted to the oral product. However, from the aspect that the synergistic saltiness-enhancing effect of β-caryophyllene oxide and γ-glutamyl peptide or a salt thereof is more significant, the amount is preferably 1500 ppb by weight or less, more preferably 1200 ppb by weight or less, further preferably 120 ppb by weight or less, particularly preferably 70 ppb by weight or less, with respect to the total weight of the sodium chloride-containing oral product at the time of ingestion.

When the agent of the present invention contains γ-glutamyl peptide or a salt thereof, the agent is preferably added to a sodium chloride-containing oral product such that an amount of γ-glutamyl peptide or a salt thereof to be added to the sodium chloride-containing oral product falls under a specific range with respect to the total weight of the sodium chloride-containing oral product at the time of ingestion. Specifically, in this case, the amount of γ-glutamyl peptide or a salt thereof to be added to the sodium chloride-containing oral product is preferably 100 ppb by weight or more, more preferably 200 ppb by weight or more, further preferably 300 ppb by weight or more, particularly preferably 400 ppb by weight or more, with respect to the total weight of the sodium chloride-containing oral product at the time of ingestion, from the aspect of effective enhancement of the saltiness of the oral product. In this case, the upper limit is not set on the amount of γ-glutamyl peptide or a salt thereof to be added to the sodium chloride-containing oral product as long as a smell derived from γ-glutamyl peptide or a salt thereof is not imparted to the oral product. However, from the aspect that the synergistic saltiness-enhancing effect of β-caryophyllene oxide and γ-glutamyl peptide or a salt thereof is more significant, the amount is preferably 10000 ppb by weight or less, more preferably 7000 ppb by weight or less, further preferably 1200 ppb by weight or less, particularly preferably 800 ppb by weight or less, with respect to the total weight of the sodium chloride-containing oral product at the time of ingestion.

In one embodiment, the agent of the present invention is preferably used to suppress the off-taste of an off-taste substance-containing oral product (e.g., off-taste substance-containing food, off-taste substance-containing oral medicament, etc.). Thus, in one embodiment, the agent of the present invention may be an agent for suppressing the off-taste of an off-taste substance-containing oral product. The agent of the present invention can suppress the off-taste of the off-taste substance-containing oral product without imparting a smell to the oral product.

In the present invention, the "off-taste substance-containing oral product" refers to an oral product that essentially contains an off-taste substance (e.g., off-taste substance-containing food, off-taste substance-containing oral medicament, etc.).

In the present invention, the "off-taste substance" refers to a substance that can produce an off-taste in the mouth. In the present invention, the "off-taste" refers to a taste or flavor that may cause an uncomfortable feeling (e.g., an uncomfortable taste and flavor that are not felt when ingesting or taking ordinary foods, oral medicines, or the like). Specific examples thereof include bitterness, a rough taste, a harsh taste, a metallic taste, an astringent taste (straining, feeling that the tongue is squeezed) and the like.

Specific examples of the off-taste substance include saltiness-substituting or -enhancing substances such as potassium chloride, calcium chloride, magnesium chloride, ammonium chloride, lysine hydrochloride, arginine hydrochloride or the like; amino acids or salts thereof such as branched-chain amino acids (valine, leucine, isoleucine), tryptophan, phenylalanine, arginine, cysteine, methionine, lysine, histidine, glycine or the like; high-intensity sweeteners such as stevia (rebaudioside, stevioside), acesulfame potassium, sucralose, aspartame, thaumatin, saccharin or the like; plant-derived proteins such as soybean protein, pea protein, broad bean protein, chickpea protein, almond protein, sunflower protein or the like; emulsifiers such as fatty acid monoglyceride, polyglycerol fatty acid ester, organic acid monoglyceride, sugar ester, sorbitan fatty acid ester, propylene glycol fatty acid ester, lecithin, enzymatically decomposed lecithin or the like; and bacteriostatic agents such as acetic acid or a salt thereof (e.g., sodium acetate, etc.), glycine or the like. Among these, potassium chloride, branched-chain amino acid, stevia, soybean protein, emulsifier, and sodium acetate are preferred because the agent of the present invention can effectively suppress off-tastes. In the present invention, the "saltiness-substituting or -enhancing substance" is a general term for saltiness substituting substances (substances that can exhibit a taste similar to saltiness) and saltiness enhancing substances (substances that can enhance saltiness). In other words, the saltiness-substituting or -enhancing substance means a saltiness substituting substance or a saltiness enhancing substance.

In the present invention, the "suppression" of an off-taste refers to making the off-taste partially or completely undetectable. The presence or absence and the degree of the off-taste can be evaluated, for example, by sensory evaluation or the like by an expert panel.

In one embodiment, the off-taste that may be suppressed by the agent of the present invention may be derived from saltiness-substituting or -enhancing substance (e.g., potassium chloride, etc.), and examples of the specific kind thereof include bitterness, metallic taste, harsh taste, astringent taste, and the like. That is, the agent of the present invention may be, in one embodiment, an agent for suppressing an off-taste (preferably, at least one off-taste selected from the group consisting of bitterness, a metallic taste, a harsh taste, and an astringent taste) of an oral product containing saltiness-substituting or -enhancing substance (e.g., potassium chloride, etc.).

In one embodiment, the off-taste that can be suppressed by the agent of the present invention may be derived from a high-intensity sweetener (e.g., stevia, etc.). Specific examples of the kind thereof include bitterness, a harsh taste, a metallic taste, and the like. That is, the agent of the present invention may be, in one embodiment, an agent for suppressing an off-taste (preferably, at least one off-taste selected from the group consisting of bitterness, a harsh taste and a metallic taste) of an oral product containing a high-intensity sweetener (e.g., stevia, etc.).

In one embodiment, the off-taste that may be suppressed by the agent of the present invention may be derived from an amino acid or a salt thereof (e.g., branched chain amino acid, etc.), and examples of the specific kind thereof include bitterness, a harsh taste, and the like. That is, the agent of the present invention may be, in one embodiment, an agent for suppressing an off-taste (preferably, at least one off-taste selected from the group consisting of bitterness and a harsh taste) of an oral product containing amino acid or a salt thereof (e.g., branched chain amino acid, etc.).

In one embodiment, the off-taste that may be suppressed by the agent of the present invention may be derived from a vegetable protein (e.g., soy protein, etc.), and examples of the specific kind thereof include bitterness, a harsh taste, an astringent taste, and the like. That is, the agent of the present invention may be, in one embodiment, an agent for suppressing an off-taste (preferably, at least one off-taste selected from the group consisting of bitterness, a harsh taste, and an astringent taste) of an oral product containing a plant-derived protein (e.g., soybean protein, etc.).

In one embodiment, the off-taste that may be suppressed by the agent of the present invention may be derived from an emulsifier (e.g., fatty acid monoglyceride, etc.), and examples of the specific kind thereof include bitterness, a harsh taste, an astringent taste, and the like. That is, the agent of the present invention may be, in one embodiment, an agent for suppressing an off-taste (preferably, at least one off-taste selected from the group consisting of bitterness, a harsh taste, and an astringent taste) of an oral product containing an emulsifier (e.g., fatty acid monoglyceride, etc.).

In one embodiment, the off-taste that can be suppressed by the agent of the present invention may be derived from a bacteriostatic agent (e.g., sodium acetate, etc.). Specific examples of the kind thereof include bitterness, a harsh taste, an astringent taste, and the like. That is, the agent of the present invention may be, in one embodiment, an agent for suppressing an off-taste (preferably, at least one off-taste selected from the group consisting of bitterness, a harsh taste, and an astringent taste) of an oral product containing a bacteriostatic agent (e.g., sodium acetate, etc.).

The off-taste substance-containing food for which the agent of the present invention can be used is not particularly limited as long as it contains an off-taste substance and can be taken orally. Specific examples of the off-taste substance-containing food for which the agent of the present invention can be used include foods similar to the aforementioned specific examples of the sodium chloride-containing food for which the agent of the present invention can be used.

In one embodiment, the off-taste substance-containing food for which the agent of the present invention is used may be a low-salt food. In the present invention, the "low-salt food" refers to a food whose sodium chloride concentration (sodium chloride content) at the time of eating is adjusted to be lower than the general sodium chloride concentration of the food. A saltiness-substituting or -enhancing substance such as potassium chloride and the like can be used in low-salt foods for the purpose of compensating for the lack of saltiness of low-salt foods.

The form of an off-taste substance containing oral medicament for which the agent of the present invention can be used is not particularly limited, and specific examples include those similar to the aforementioned form of the sodium chloride-containing oral medicament for which the agent of the present invention can be used.

The content of an off-taste substance in the off-taste substance-containing oral product (e.g., off-taste substance-containing food, off-taste substance-containing oral medicament, etc.) for which the agent of the present invention can be used varies depending on the kind of the off-taste substance and the like and is not particularly limited. It is generally 0.01 wt% or more, and because the off-taste can be effectively suppressed, it is preferably 0.03 wt% or more, more preferably 0.05 wt% or more, particularly preferably 0.1 wt% or more, with respect to the total weight of the off-taste substance-containing oral product at the time of ingestion (e.g., at the time of eating, when it is taken, etc.). The content of an off-taste substance in the off-taste substance-containing oral product for which the agent of the present invention can be used is preferably 10 wt% or less, more preferably 5 wt% or less, further preferably 3 wt% or less, particularly preferably 1 wt% or less, with respect to the total weight of the off-taste substance-containing oral product at the time of ingestion.

The production method of the off-taste substance contained in an off-taste substance-containing oral product is not particularly limited as long as it can be orally ingested, and an off-taste substance produced by a method known per se or a method analogous thereto may be used. The off-taste substance may be a commercially available product.

In the present invention, one embodiment of the off-taste substance contained in an off-taste substance-containing oral product may be a chemically synthesized product produced by a chemical synthesis method, or an isolated product extracted and purified from a material containing an off-taste substance. In addition, a material containing an off-taste substance may be used as it is or after purification to a desired degree.

The components of the off-taste substance-containing oral product other than the off-taste substance are not particularly limited as long as they do not impair the object of the present invention, and the off-taste substance-containing oral product for which the agent of the present invention can be used may contain, in addition to the off-taste substance, any materials and additives depending on the kind of the oral product and the like. In one embodiment, the off-taste substance-containing oral product for which the agent of the present invention can be used may contain sodium chloride in addition to the off-taste substance.

The method and conditions for adding the agent of the present invention to an off-taste substance-containing oral product are not particularly limited, and can be appropriately set depending on the form of the agent of the present invention, the kind of the off-taste substance-containing oral product, and the like. The timing of addition of the agent of the present invention to the off-taste substance-containing oral product is not particularly limited, and it may be added at any time. For example, during production of the off-taste substance-containing oral product, after completion of the off-taste substance-containing oral product (e.g., immediately before ingestion of the off-taste substance-containing oral product, during ingestion of the off-taste substance-containing oral product, etc.) and the like can be mentioned. The agent of the present invention may be added to a raw material before producing an off-taste substance-containing oral product.

Since the agent of the present invention can effectively suppress off-tastes, the agent of the present invention is preferably added to an off-taste substance-containing oral product such that an amount of β-caryophyllene oxide to be added to the off-taste substance-containing oral product (e.g., off-taste substance-containing food, off-taste substance-containing oral medicament, etc.) falls within a particular range with respect to the total weight of the off-taste substance-containing oral product at the time of ingestion (e.g., at the time of eating, when it is taken, etc.). Specifically, the amount of β-caryophyllene oxide to be added to the off-taste substance-containing oral product is preferably 30 ppb by weight or more, more preferably 80 ppb by weight or more, further preferably 100 ppb by weight or more, particularly preferably 300 ppb by weight or more, with respect to the total weight of the off-taste substance-containing oral product at the time of ingestion. In addition, the amount of β-caryophyllene oxide to be added to the off-taste substance-containing oral product is preferably 50000 ppb by weight or less, more preferably 30000 ppb by weight or less, further preferably 20000 ppb by weight or less, particularly preferably 15000 ppb by weight or less, with respect to the total weight of the off-taste substance-containing oral product at the time of ingestion.

When the agent of the present invention contains γ-glutamyl peptide or a salt thereof, the amount of β-caryophyllene oxide to be added to the off-taste substance-containing oral product is preferably 0.1 ppb by weight or more, more preferably 1 ppb by weight or more, further preferably 3 ppb by weight or more, particularly preferably 10 ppb by weight or more, with respect to the total weight of the off-taste substance-containing oral product at the time of ingestion, from the aspect of effective suppression of the off-taste of the off-taste substance-containing oral product. In this case, the upper limit is not set on the amount of β-caryophyllene oxide to be added to the off-taste substance-containing oral product as long as a smell derived from β-caryophyllene oxide is not imparted to the oral product. However, from the aspect that the synergistic off-taste suppressing effect of β-caryophyllene oxide and γ-glutamyl peptide or a salt thereof is more significant, the amount is preferably 150 ppb by weight or less, more preferably 100 ppb by weight or less, further preferably 70 ppb by weight or less, particularly preferably 50 ppb by weight or less, with respect to the total weight of the off-taste substance-containing oral product at the time of ingestion.

When the agent of the present invention contains γ-glutamyl peptide or a salt thereof, the agent is preferably added to an off-taste substance-containing oral product such that an amount of γ-glutamyl peptide or a salt thereof to be added to the off-taste substance-containing oral product falls under a specific range with respect to the total weight of the off-taste substance-containing oral product at the time of ingestion. Specifically, in this case, the amount of γ-glutamyl peptide or a salt thereof to be added to the off-taste substance-containing oral product is preferably 100 ppb by weight or more, more preferably 500 ppb by weight or more, further preferably 1000 ppb by weight or more, particularly preferably 2800 ppb by weight or more, with respect to the total weight of the off-taste substance-containing oral product at the time of ingestion, from the aspect of effective suppression of the off-taste of the oral product. In this case, the upper limit is not set on the amount of γ-glutamyl peptide or a salt thereof to be added to the off-taste substance-containing oral product as long as a smell derived from γ-glutamyl peptide or a salt thereof is not imparted to the oral product. However, from the aspect that the synergistic off-taste suppressing effect of β-caryophyllene oxide and γ-glutamyl peptide or a salt thereof is more significant, the amount is preferably 30000 ppb by weight or less, more preferably 25000 ppb by weight or less, further preferably 20000 ppb by weight or less, particularly preferably 15000 ppb by weight or less, with respect to the total weight of the off-taste substance-containing oral product at the time of ingestion.

### (The composition of the present invention)

The present invention also provides a composition containing β-caryophyllene oxide, and γ-glutamyl peptide or a salt thereof (sometimes referred to simply as "the composition of the present invention" in the present specification).

The β-caryophyllene oxide contained in the composition of the present invention is the same as that contained in the aforementioned agent of the present invention. The content of β-caryophyllene oxide in the composition of the present invention is the same as the content of β-caryophyllene oxide in the aforementioned agent of the present invention, and the preferred range is also the same.

The γ-glutamyl peptide or a salt thereof contained in the composition of the present invention is the same as that contained in the aforementioned agent of the present invention, and the preferred embodiments are also the same. The content of γ-glutamyl peptide or a salt thereof in the composition of the present invention is the same as the content of γ-glutamyl peptide or a salt thereof in the aforementioned agent of the present invention, and the preferred range is also the same.

The form and components of the composition of the present invention are the same as those of the aforementioned agent of the present invention. The composition of the present invention can be produced in the same manner as the aforementioned agent of the present invention.

In one embodiment, the composition of the present invention can be used for a sodium chloride-containing oral product. Thus, in one embodiment, the composition of the present invention may be a composition for a sodium chloride-containing oral product. The composition of the present invention can enhance the saltiness of the sodium chloride-containing oral product without imparting a smell to the oral product. The sodium chloride-containing oral product for which the composition of the present invention can be used is the same as that for which the aforementioned agent of the present invention can be used, and preferred embodiments are also the same. The mode of use of the composition of the present invention for a sodium chloride-containing oral product is also the same as that of the aforementioned agent of the present invention, and the preferred modes are also the same.

In one embodiment, the composition of the present invention can be used for an off-taste substance-containing oral product. Thus, in one embodiment, the composition of the present invention may be a composition for an off-taste substance-containing oral product. The composition of the present invention can suppress an off-taste of the off-taste substance-containing oral product without imparting a smell to the oral product. The off-taste substance-containing oral product for which the composition of the present invention can be used is the same as that for which the aforementioned agent of the present invention can be used, and preferred embodiments are also the same. The mode of use of the composition of the present invention for an off-taste substance-containing oral product is also the same as that of the aforementioned agent of the present invention, and the preferred modes are also the same.

### (The production method of the present invention)

The present invention also provides a method for producing a sodium chloride- or off-taste substance-containing oral product, including adding β-caryophyllene oxide (sometimes referred to simply as "the production method of the present invention" in the present specification).

The β-caryophyllene oxide used in the production method of the present invention is also the same as that contained in the aforementioned agent of the present invention.

The production method of the present invention may, in one embodiment, further include adding γ-glutamyl peptide or a salt thereof in addition to the addition of β-caryophyllene oxide. By further including adding γ-glutamyl peptide or a salt thereof in addition to the addition of β-caryophyllene oxide, the production method of the present invention can produce an off-taste substance-containing oral product with a more effectively suppressed off-taste.

The γ-glutamyl peptide or a salt thereof that can be used in the production method of the present invention is the same as that contained in the aforementioned agent of the present invention, and the preferred embodiments are also the same.

The production method of the present invention may be, in one embodiment, a production method of a sodium chloride-containing oral product (e.g., sodium chloride-containing food, sodium chloride-containing oral medicament, etc.). The production method of the present invention can produce a sodium chloride-containing oral product with an enhanced saltiness, without imparting a smell.

The production method of the present invention may be, in one embodiment, a production method of an off-taste substance-containing oral product (e.g., off-taste substance-containing food, off-taste substance containing oral medicament, etc.). The production method of the present invention can produce an off-taste substance-containing oral product with a suppressed off-taste, without imparting a smell.

The production method of the present invention may be, in one embodiment, a production method of an oral product containing saltiness-substituting or -enhancing substance (e.g., potassium chloride, etc.) (preferably, an oral product with a suppressed off-taste). In addition, the production method of the present invention may be, in one embodiment, a production method of an oral product containing saltiness-substituting or -enhancing substance (e.g., potassium chloride, etc.), in which an off-taste derived from the saltiness-substituting or -enhancing substance (preferably, at least one off-taste selected from the group consisting of bitterness, a metallic taste, a harsh taste and an astringent taste) is suppressed.

The production method of the present invention may be, in one embodiment, a production method of an oral product (preferably, an oral product with a suppressed off-taste) containing a high-intensity sweetener (e.g., stevia, etc.). In addition, the production method of the present invention may be, in one embodiment, a production method of an oral product containing a high-intensity sweetener (e.g., stevia, etc.), in which an off-taste derived from the high-intensity sweetener (preferably, at least one off-taste selected from the group consisting of bitterness, a harsh taste and a metallic taste) is suppressed.

The production method of the present invention may be, in one embodiment, a production method of an oral product (preferably, an oral product with a suppressed off-taste) containing amino acid or a salt thereof (e.g., branched chain amino acid, etc.). In addition, the production method of the present invention may be, in one embodiment, a production method of an oral product containing amino acid or a salt thereof (e.g., branched chain amino acid, etc.) in which an off-taste derived from the amino acid or a salt thereof (preferably, at least one off-taste selected from the group consisting of bitterness and a harsh taste) is suppressed.

The production method of the present invention may be, in one embodiment, a production method of an oral product (preferably, an oral product with a suppressed off-taste) containing a plant-derived protein (e.g., soybean protein, etc.). In addition, the production method of the present invention may be, in one embodiment, a production method of an oral product containing a plant-derived protein (e.g., soybean protein, etc.) in which an off-taste derived from the plant-derived protein (preferably, at least one off-taste selected from the group consisting of bitterness, a harsh taste, and an astringent taste) is suppressed.

The production method of the present invention may be, in one embodiment, a production method of an oral product (preferably, an oral product with a suppressed off-taste) containing an emulsifier (e.g., fatty acid monoglyceride, etc.). In addition, the production method of the present invention may be, in one embodiment, a production method of an oral product containing an emulsifier (e.g., fatty acid monoglyceride, etc.) in which an off-taste derived from the emulsifier (preferably, at least one off-taste selected from the group consisting of bitterness, a harsh taste, and an astringent taste) is suppressed.

The production method of the present invention may be, in one embodiment, a production method of an oral product (preferably, an oral product with a suppressed off-taste) containing a bacteriostatic agent (e.g., sodium acetate, etc.). In addition, the production method of the present invention may be, in one embodiment, a production method of an oral product containing a bacteriostatic agent (e.g., sodium acetate, etc.) in which an off-taste derived from the bacteriostatic agent (preferably, at least one off-taste selected from the group consisting of bitterness, a harsh taste, and an astringent taste) is suppressed.

In the production method of the present invention, when the production method of the present invention is a production method of a sodium chloride-containing oral product, the amount of β-caryophyllene oxide to be added may be within the same range as the amount of β-caryophyllene oxide to be added to the sodium chloride-containing oral product for which the aforementioned agent of the present invention can be used, and preferred range is also the same. In the production method of the present invention, moreover, when the production method of the present invention is a production method of an off-taste substance-containing oral product, the amount of β-caryophyllene oxide to be added may be within the same range as the amount of β-caryophyllene oxide to be added to the off-taste substance-containing oral product for which the aforementioned agent of the present invention can be used, and preferred range is also the same.

When the production method of the present invention, in one embodiment, further comprises adding γ-glutamyl peptide or a salt thereof in addition to the addition of β-caryophyllene oxide, the amount of γ-glutamyl peptide or a salt thereof to be added may be within the same range as the amount of γ-glutamyl peptide or a salt thereof to be added to the oral product for which the aforementioned agent of the present invention can be used, and preferred range is also the same.

In the production method of the present invention, β-caryophyllene oxide, γ-glutamyl peptide or a salt thereof may be added using the aforementioned agent of the present invention.

The production method of the present invention may appropriately include, in addition to the addition of β-caryophyllene oxide, γ-glutamyl peptide or a salt thereof, a production step and a treatment step conventionally used in the production of oral products, depending on the kind of the oral product to be produced.

The kind of the sodium chloride- or off-taste substance-containing oral product obtained by the production method of the present invention is not particularly limited. For example, those similar to the examples of the sodium chloride-containing oral product for which the agent of the present invention can be used can be mentioned.

According to the production method of the present invention, an oral product containing β-caryophyllene oxide, and sodium chloride or an off-taste substance (sometimes referred to simply as "the oral product of the present invention" in the present specification) can be produced. The oral product of the present invention may be, in one embodiment, an oral product (e.g., food, oral medicament, etc.) containing β-caryophyllene oxide and sodium chloride, preferably an oral product containing β-caryophyllene oxide and sodium chloride, in which saltiness is enhanced. In addition, the oral product of the present invention may be, in another embodiment, an oral product (e.g., food, oral medicament, etc.) containing β-caryophyllene oxide and off-taste substance, preferably an oral product containing β-caryophyllene oxide and an off-taste substance, in which an off-taste (off-taste derived from off-taste substance) is suppressed.

The oral product of the present invention may be, in one embodiment, an oral product (e.g., food, oral medicament, etc.) containing β-caryophyllene oxide, γ-glutamyl peptide or a salt thereof, and an off-taste substance, preferably an oral product containing β-caryophyllene oxide, γ-glutamyl peptide or a salt thereof, and an off-taste substance, in which an off-taste (off-taste derived from off-taste substance) is suppressed.

The oral product of the present invention may be, in one embodiment, an oral product (preferably, an oral product with a suppressed off-taste) containing β-caryophyllene oxide and saltiness-substituting or -enhancing substance (e.g., potassium chloride, etc.). In addition, the oral product of the present invention may be, in one embodiment, an oral product containing β-caryophyllene oxide and saltiness-substituting or -enhancing substance (e.g., potassium chloride, etc.), in which an off-taste derived from the saltiness-substituting or -enhancing substance (preferably, at least one off-taste selected from the group consisting of bitterness, a metallic taste, a harsh taste and an astringent taste) is suppressed.

The oral product of the present invention may be, in one embodiment, an oral product (preferably, an oral product with a suppressed off-taste) containing β-caryophyllene oxide, γ-glutamyl peptide or a salt thereof, and saltiness-substituting or -enhancing substance (e.g., potassium chloride, etc.). In addition, the oral product of the present invention may be, in one embodiment, an oral product containing β-caryophyllene oxide, γ-glutamyl peptide or a salt thereof, and saltiness-substituting or -enhancing substance (e.g., potassium chloride, etc.), in which an off-taste derived from the saltiness-substituting or -enhancing substance (preferably, at least one off-taste selected from the group consisting of bitterness, a metallic taste, a harsh taste and an astringent taste) is suppressed.

The oral product of the present invention may be, in one embodiment, an oral product (preferably, an oral product with a suppressed off-taste) containing β-caryophyllene oxide and a high-intensity sweetener (e.g., stevia, etc.). In addition, the oral product of the present invention may be, in one embodiment, an oral product containing β-caryophyllene oxide and a high-intensity sweetener (e.g., stevia, etc.), in which an off-taste derived from the high-intensity sweetener (preferably, at least one off-taste selected from the group consisting of bitterness, a harsh taste and a metallic taste) is suppressed.

The oral product of the present invention may be, in one embodiment, an oral product (preferably, an oral product with a suppressed off-taste) containing β-caryophyllene oxide, γ-glutamyl peptide or a salt thereof, and a high-intensity sweetener (e.g., stevia, etc.). In addition, the oral product of the present invention may be, in one embodiment, an oral product containing β-caryophyllene oxide, γ-glutamyl peptide or a salt thereof, and a high-intensity sweetener (e.g., stevia, etc.), in which an off-taste derived from the high-intensity sweetener (preferably, at least one off-taste selected from the group consisting of bitterness, a harsh taste and a metallic taste) is suppressed.

The oral product of the present invention may be, in one embodiment, an oral product (preferably, an oral product with a suppressed off-taste) containing β-caryophyllene oxide, and amino acid or a salt thereof (e.g., branched chain amino acid, etc.). In addition, the oral product of the present invention may be, in one embodiment, an oral product containing β-caryophyllene oxide, and amino acid or a salt thereof (e.g., branched chain amino acid, etc.) in which an off-taste derived from the amino acid or a salt thereof (preferably, at least one off-taste selected from the group consisting of bitterness and a harsh taste) is suppressed.

The oral product of the present invention may be, in one embodiment, an oral product (preferably, an oral product with a suppressed off-taste) containing β-caryophyllene oxide, γ-glutamyl peptide or a salt thereof, and amino acid or a salt thereof (e.g., branched chain amino acid, etc.). In addition, the oral product of the present invention may be, in one embodiment, an oral product containing β-caryophyllene oxide, γ-glutamyl peptide or a salt thereof, and amino acid or a salt thereof (e.g., branched chain amino acid, etc.) in which an off-taste derived from the amino acid or a salt thereof (preferably, at least one off-taste selected from the group consisting of bitterness and a harsh taste) is suppressed.

The oral product of the present invention may be, in one embodiment, an oral product (preferably, an oral product with a suppressed off-taste) containing β-caryophyllene oxide and a plant-derived protein (e.g., soybean protein, etc.). In addition, the oral product of the present invention may be, in one embodiment, an oral product containing β-caryophyllene oxide and a plant-derived protein (e.g., soybean protein, etc.) in which an off-taste derived from the plant-derived protein (preferably, at least one off-taste selected from the group consisting of bitterness, a harsh taste, and an astringent taste) is suppressed.

The oral product of the present invention may be, in one embodiment, an oral product (preferably, an oral product with a suppressed off-taste) containing β-caryophyllene oxide, γ-glutamyl peptide or a salt thereof, and a plant-derived protein (e.g., soybean protein, etc.). In addition, the oral product of the present invention may be, in one embodiment, an oral product containing β-caryophyllene oxide, γ-glutamyl peptide or a salt thereof, and a plant-derived protein (e.g., soybean protein, etc.) in which an off-taste derived from the plant-derived protein (preferably, at least one off-taste selected from the group consisting of bitterness, a harsh taste, and an astringent taste) is suppressed.

The oral product of the present invention may be, in one embodiment, an oral product (preferably, an oral product with a suppressed off-taste) containing β-caryophyllene oxide and an emulsifier (e.g., fatty acid monoglyceride, etc.). In addition, the oral product of the present invention may be, in one embodiment, an oral product containing β-caryophyllene oxide and an emulsifier (e.g., fatty acid monoglyceride, etc.) in which an off-taste derived from the emulsifier (preferably, at least one off-taste selected from the group consisting of bitterness, a harsh taste, and an astringent taste) is suppressed.

The oral product of the present invention may be, in one embodiment, an oral product (preferably, an oral product with a suppressed off-taste) containing β-caryophyllene oxide, γ-glutamyl peptide or a salt thereof, and an emulsifier (e.g., fatty acid monoglyceride, etc.). In addition, the oral product of the present invention may be, in one embodiment, an oral product containing β-caryophyllene oxide, γ-glutamyl peptide or a salt thereof, and an emulsifier (e.g., fatty acid monoglyceride, etc.) in which an off-taste derived from the emulsifier (preferably, at least one off-taste selected from the group consisting of bitterness, a harsh taste, and an astringent taste) is suppressed.

The oral product of the present invention may be, in one embodiment, an oral product (preferably, an oral product with a suppressed off-taste) containing β-caryophyllene oxide and a bacteriostatic agent (e.g., sodium acetate, etc.). In addition, the oral product of the present invention may be, in one embodiment, an oral product containing β-caryophyllene oxide and a bacteriostatic agent (e.g., sodium acetate, etc.) in which an off-taste derived from the bacteriostatic agent (preferably, at least one off-taste selected from the group consisting of bitterness, a harsh taste, and an astringent taste) is suppressed.

The oral product of the present invention may be, in one embodiment, an oral product (preferably, an oral product with a suppressed off-taste) containing β-caryophyllene oxide, γ-glutamyl peptide or a salt thereof, and a bacteriostatic agent (e.g., sodium acetate, etc.). In addition, the oral product of the present invention may be, in one embodiment, an oral product containing β-caryophyllene oxide, γ-glutamyl peptide or a salt thereof, and a bacteriostatic agent (e.g., sodium acetate, etc.) in which an off-taste derived from the bacteriostatic agent (preferably, at least one off-taste selected from the group consisting of bitterness, a harsh taste, and an astringent taste) is suppressed.

When the oral product of the present invention contains sodium chloride in one embodiment, the content of β-caryophyllene oxide in the oral product of the present invention may be within the same range as the amount of β-caryophyllene oxide to be added to the sodium chloride-containing oral product for which the aforementioned agent of the present invention can be used, and preferred range is also the same. In addition, when the oral product of the present invention contains an off-taste substance in one embodiment, the content of β-caryophyllene oxide in the oral product of the present invention may be within the same range as the amount of β-caryophyllene oxide to be added to the off-taste substance-containing oral product for which the aforementioned agent of the present invention can be used, and preferred range is also the same.

When the oral product of the present invention contains γ-glutamyl peptide or a salt thereof in one embodiment, the content of γ-glutamyl peptide or a salt thereof may be within the same range as the amount of γ-glutamyl peptide or a salt thereof to be added to the oral product for which the aforementioned agent of the present invention can be used, and preferred range is also the same.

The content of sodium chloride in the oral product of the present invention (sodium chloride concentration) is not particularly limited. The content can be set in the same manner as in the sodium chloride-containing oral product for which the aforementioned agent of the present invention can be used, and the preferred range is also the same.

The content of the off-taste substance in the oral product of the present invention is not particularly limited. The content can be set in the same manner as in the off-taste substance-containing oral product for which the aforementioned agent of the present invention can be used, and the preferred range is also the same.

The oral product of the present invention may contain other components in addition to β-caryophyllene oxide, γ-glutamyl peptide or a salt thereof, and sodium chloride or an off-taste substance. The kinds of components other than β-caryophyllene oxide, γ-glutamyl peptide or a salt thereof, and sodium chloride or an off-taste substance are not particularly limited as long as they do not impair the purpose of the present invention, and may be selected appropriately depending on the kind of the oral product of the present invention. In addition, the contents of the components other than β-caryophyllene oxide, γ-glutamyl peptide or a salt thereof, and sodium chloride or an off-taste substance are also not particularly limited as long as they do not impair the purpose of the present invention, and may be set appropriately depending on the kind of the oral product of the present invention.

### (The method of the present invention)

The present invention also provides a method for enhancing the saltiness or suppressing the off-taste of a sodium chloride- or off-taste substance-containing oral product, including adding β-caryophyllene oxide to the oral product (sometimes referred to simply as "the method of the present invention" in the present specification).

The β-caryophyllene oxide used in the method of the present invention is the same as that contained in the aforementioned agent of the present invention.

The method of the present invention may, in one embodiment, further include adding γ-glutamyl peptide or a salt thereof in addition to the addition of β-caryophyllene oxide to the sodium chloride- or off-taste substance-containing oral product. By further including addition of γ-glutamyl peptide or a salt thereof in addition to the addition of β-caryophyllene oxide to the sodium chloride- or off-taste substance-containing oral product, the method of the present invention can more effectively suppress the off-taste of the oral product.

The γ-glutamyl peptide or a salt thereof used in the method of the present invention is the same as that contained in the aforementioned agent of the present invention, and the preferred embodiments are also the same.

The method of the present invention may be, in one embodiment, a method for enhancing the saltiness of a sodium chloride-containing oral product (e.g., sodium chloride-containing food, sodium chloride-containing oral medicament, etc.). The method of the present invention can enhance the saltiness of the sodium chloride-containing oral product without imparting a smell to the oral product.

When β-caryophyllene oxide is added to the sodium chloride-containing oral product in one embodiment of the method of the present invention, the amount of β-caryophyllene oxide to be added may be within the same range as the amount of β-caryophyllene oxide to be added to the sodium chloride-containing oral product for which the aforementioned agent of the present invention can be used, and preferred range is also the same.

When the method of the present invention, in one embodiment, further comprises adding γ-glutamyl peptide or a salt thereof in addition to the addition of β-caryophyllene oxide to the sodium chloride-containing oral product, the amount of γ-glutamyl peptide or a salt thereof to be added may be within the same range as the amount of γ-glutamyl peptide or a salt thereof to be added to the sodium chloride-containing oral product for which the aforementioned agent of the present invention can be used, and preferred range is also the same.

The kind of the sodium chloride-containing oral product to which β-caryophyllene oxide is added in the method of the present invention is not particularly limited. For example, those similar to the examples recited as the sodium chloride-containing oral product for which the agent of the present invention can be used can be mentioned.

The content of sodium chloride in the oral product to which β-caryophyllene oxide is added in the method of the present invention (sodium chloride concentration) is not particularly limited. The content can be set in the same manner as the content of sodium chloride in the sodium chloride-containing oral product for which the aforementioned agent of the present invention can be used, and the preferred range is also the same.

The method of the present invention may be, in one embodiment, a method for suppressing the off-taste of an off-taste substance-containing oral product (e.g., off-taste substance-containing food, off-taste substance containing oral medicament, etc.). The method of the present invention can suppress the off-taste of the off-taste substance-containing oral product without imparting a smell to the oral product.

The method of the present invention may be, in one embodiment, a method for suppressing an off-taste (preferably, at least one off-taste selected from the group consisting of bitterness, a metallic taste, a harsh taste, and an astringent taste) of an oral product containing saltiness-substituting or -enhancing substance (e.g., potassium chloride, etc.).

The method of the present invention may be, in one embodiment, a method for suppressing an off-taste (preferably, at least one off-taste selected from the group consisting of bitterness, a harsh taste and a metallic taste) of an oral product containing a high-intensity sweetener (e.g., stevia, etc.).

The method of the present invention may be, in one embodiment, a method for suppressing an off-taste (preferably, at least one off-taste selected from the group consisting of bitterness and a harsh taste) of an oral product containing amino acid or a salt thereof (e.g., branched chain amino acid, etc.).

The method of the present invention may be, in one embodiment, a method for suppressing an off-taste (preferably, at least one off-taste selected from the group consisting of bitterness, a harsh taste, and an astringent taste) of an oral product containing a plant-derived protein (e.g., soybean protein, etc.).

The method of the present invention may be, in one embodiment, a method for suppressing an off-taste (preferably, at least one off-taste selected from the group consisting of bitterness, a harsh taste, and an astringent taste) of an oral product containing an emulsifier (e.g., fatty acid monoglyceride, etc.).

The method of the present invention may be, in one embodiment, a method for suppressing an off-taste (preferably, at least one off-taste selected from the group consisting of bitterness, a harsh taste, and an astringent taste) of an oral product containing a bacteriostatic agent (e.g., sodium acetate, etc.).

When β-caryophyllene oxide is added to the off-taste substance-containing oral product in one embodiment of the method of the present invention, the amount of β-caryophyllene oxide to be added may be within the same range as the amount of β-caryophyllene oxide to be added to the off-taste substance-containing oral product for which the aforementioned agent of the present invention can be used, and preferred range is also the same.

When the method of the present invention, in one embodiment, further comprises adding γ-glutamyl peptide or a salt thereof in addition to the addition of β-caryophyllene oxide to the off-taste substance-containing oral product, the amount of γ-glutamyl peptide or a salt thereof to be added may be within the same range as the amount of γ-glutamyl peptide or a salt thereof to be added to the off-taste substance-containing oral product for which the aforementioned agent of the present invention can be used, and preferred range is also the same.

The kind of the off-taste substance-containing oral product to which β-caryophyllene oxide is added in the method of the present invention is not particularly limited. For example, those similar to the examples recited as the sodium chloride-containing oral product for which the agent of the present invention can be used can be mentioned.

The content of the off-taste substance in the oral product to which β-caryophyllene oxide is added in the method of the present invention is not particularly limited. The content can be set in the same manner as the content of the off-taste substance in the off-taste substance-containing oral product for which the aforementioned agent of the present invention can be used, and the preferred range is also the same.

In the method of the present invention, the method and conditions for adding β-caryophyllene oxide to a sodium chloride- or off-taste substance-containing oral product are not particularly limited, and can be appropriately set depending on the kind of the oral product and the like. The timing of addition of β-caryophyllene oxide to the sodium chloride- or off-taste substance-containing oral product is not particularly limited, and it may be added at any time. For example, during production of the oral product, after completion of the oral product (e.g., immediately before ingestion of the oral product, during ingestion of the oral product, etc.) and the like can be mentioned. The β-caryophyllene oxide may be added to a raw material before producing the sodium chloride- or off-taste substance-containing oral product.

While the present invention is described in more detail in the following Examples, the present invention is not limited by these examples. In the present specification, "%", "ppm", and "ppb" mean "wt%", "ppm by weight", and "ppb by weight" unless otherwise specified.

Unless otherwise noted, all raw materials used in the following Examples are commercially available for foods. Tap water was used after filtering.

### [Example]

### <Test 1>

### (Production of Reference Sample 1 (Negative Control))

Commercially available cheese sauce (manufactured by Seven & i Holdings Co., Ltd., "Seven Premium 3 SHU NO Cheese NI KODAWATTA Carbonara", sodium chloride equivalent: 2.5 g per 130 g) was mixed with warm water in the amounts shown in Table 1 below to produce Reference Sample 1.

### (Production of Reference Samples 2 and 3)

Commercially available cheese sauce (manufactured by Seven & i Holdings Co., Ltd., "Seven Premium 3 SHU NO Cheese NI KODAWATTA Carbonara", sodium chloride equivalent: 2.5 g per 130 g) was mixed with sodium chloride and warm water in the amounts shown in Table 1 below to respectively produce Reference Samples 2 and 3.

**[Table 1]**

| sample raw material | amount of use (g) | | |
|---|---|---|---|
| | Reference Sample 1 | Reference Sample 2 | Reference Sample 3 |
| cheese sauce | 52 | 52 | 52 |
| sodium chloride | | 0.05 | 0.1 |
| warm water | 48 | 47.95 | 47.9 |
| total (g) | 100 | 100 | 100 |

### (Production of evaluation sample)

β-caryophyllene oxide was added to Reference Sample 1 (negative control) to the concentration shown in Table 2 below to produce evaluation samples. The amount of warm water used was appropriately adjusted so that the addition of β-caryophyllene oxide would not change the ratio (concentration) of the sample raw materials other than the warm water.

**[Table 2]**

| Example | β-caryophyllene oxide concentration (ppb by weight) |
|---|---|
| 1 | 100 |
| 2 | 1000 |
| 3 | 10000 |

### (Sensory evaluation of saltiness intensity)

An expert panel consisting of four trained panelists held each evaluation sample in the mouth and rated the saltiness intensity of each evaluation sample in increments of 0.1 point according to an evaluation scale in which Reference Sample 1 (negative control) was given "0 point", Reference Sample 2 was given "5 points", and Reference Sample 3 was given "10 points", and the average score of the four panelists was calculated. The expert panel was trained in advance so that the panelists would have a common understanding of how much the saltiness intensity should change to produce a 0.1 point change in the score. They also confirmed whether each evaluation sample was imparted with any smell that was not present in Reference Samples 1 to 3. The results are shown in the following Table 3.

**[Table 3]**

| Example | β-caryophyllene oxide concentration (ppb by weight) | score of saltiness intensity | imparted smell |
|---|---|---|---|
| 1 | 100 | 3.8 | none |
| 2 | 1000 | 5.8 | none |
| 3 | 10000 | 6.8 | none |

As shown in Table 3, the evaluation samples (Examples 1 to 3) to which β-caryophyllene oxide was added had higher saltiness intensity scores than Reference Sample 1 (negative control), and they had a stronger saltiness than Reference Sample 1. Therefore, the saltiness enhancing effect of β-caryophyllene oxide was confirmed in all of the evaluation samples of Examples 1 to 3.

### <Test 2>

### (Production of Reference Sample 4 (negative control))

Commercially available cheese sauce (manufactured by Seven & i Holdings Co., Ltd., "Seven Premium 3 SHU NO Cheese NI KODAWATTA Carbonara") was mixed with potassium chloride and warm water in the amounts shown in Table 4 below to produce Reference Sample 4. The commercially available cheese sauce used in this test contained almost no potassium chloride before potassium chloride was added.

### (Production of Reference Samples 5 and 6)

Commercially available cheese sauce (manufactured by Seven & i Holdings Co., Ltd., "Seven Premium 3 SHU NO Cheese NI KODAWATTA Carbonara") was mixed with potassium chloride and warm water in the amounts shown in Table 4 below to respectively produce Reference Samples 5 and 6.

**[Table 4]**

| sample raw material | amount of use (g) | | |
|---|---|---|---|
| | Reference Sample 4 | Reference Sample 5 | Reference Sample 6 |
| cheese sauce | 52 | 52 | 52 |
| potassium chloride | 0.8 | 0.6 | 0.4 |
| warm water | 47.2 | 47.4 | 47.6 |
| total (g) | 100 | 100 | 100 |

### (Production of evaluation sample)

β-caryophyllene oxide was added to Reference Sample 4 (negative control) to the concentration shown in Table 5 below to produce evaluation samples. The amount of warm water used was appropriately adjusted so that the addition of β-caryophyllene oxide would not change the ratio (concentration) of the sample raw materials other than the warm water.

**[Table 5]**

| Example | β-caryophyllene oxide concentration (ppb by weight) |
|---|---|
| 4 | 100 |
| 5 | 1000 |
| 6 | 10000 |

### (Sensory evaluation of off-taste intensity)

An expert panel consisting of four trained panelists held each evaluation sample in the mouth and rated the off-taste (bitterness, metallic taste, harsh taste, astringent taste) intensity of each evaluation sample in increments of 0.1 point according to an evaluation scale in which Reference Sample 4 (negative control) was given "10 points", Reference Sample 5 was given "5 points", and Reference Sample 6 was given "0 point", and the average score of the four panelists was calculated. The expert panel was trained in advance so that the panelists would have a common understanding of how much the off-taste intensity should change to produce a 0.1 point change in the score. They also confirmed whether each evaluation sample was imparted with any smell that was not present in Reference Samples 4 to 6. The results are shown in the following Table 6.

**[Table 6]**

| Example | β-caryophyllene oxide concentration (ppb by weight) | score of off-taste intensity | imparted smell |
|---|---|---|---|
| 4 | 100 | 7.2 | none |
| 5 | 1000 | 5.1 | none |
| 6 | 10000 | 4.7 | none |

As shown in Table 6, the evaluation samples (Examples 4 to 6) to which β-caryophyllene oxide was added had lower off-taste intensity scores than Reference Sample 4 (negative control), and they had a weaker off-taste than Reference Sample 4. Therefore, the suppressing effect of β-caryophyllene oxide against the off-taste derived from potassium chloride was confirmed in all of the evaluation samples of Examples 4 to 6.

### <Test 3>

### (Production of Reference Sample 7 (negative control) and Reference Sample 8)

Commercially available creaming powder ("Marim (registered trademark)" manufactured by Ajinomoto AGF, Inc.) was mixed with stevia (manufactured by PureCircle) and warm water in the amounts shown in Table 7 below to respectively produce Reference Samples 7 and 8. The commercially available creaming powder used in this test contained almost no stevia before stevia was added.

### (Production of Reference Sample 9)

Commercially available creaming powder ("Marim (registered trademark)" manufactured by Ajinomoto AGF, Inc.) was mixed with sugar (manufactured by Mitsui Sugar Co., Ltd.) and warm water in the amounts shown in Table 7 below to produce Reference Sample 9.

**[Table 7]**

| sample raw material | amount of use (g) | | |
|---|---|---|---|
| | Reference Sample 7 | Reference Sample 8 | Reference Sample 9 |
| creaming powder | 10 | 10 | 10 |
| sugar | | | 1.2 |
| stevia | 0.073 | 0.037 | |
| warm water | 89.927 | 89.963 | 88.8 |
| total (g) | 100 | 100 | 100 |

### (Production of evaluation sample)

β-caryophyllene oxide was added to Reference Sample 7 (negative control) to the concentration shown in Table 8 below to produce evaluation samples. The amount of warm water used was appropriately adjusted so that the addition of β-caryophyllene oxide would not change the ratio (concentration) of the sample raw materials other than the warm water.

**[Table 8]**

| Example | β-caryophyllene oxide concentration (ppb by weight) |
|---|---|
| 7 | 100 |
| 8 | 1000 |
| 9 | 10000 |

### (Sensory evaluation of off-taste intensity)

An expert panel consisting of four trained panelists held each evaluation sample in the mouth and rated the off-taste (bitterness, harsh taste, metallic taste) intensity of each evaluation sample in increments of 0.1 point according to an evaluation scale in which Reference Sample 7 (negative control) was given "10 points", Reference Sample 8 was given "5 points", and Reference Sample 9 was given "0 point", and the average score of the four panelists was calculated. The expert panel was trained in advance so that the panelists would have a common understanding of how much the off-taste intensity should change to produce a 0.1 point change in the score. They also confirmed whether each evaluation sample was imparted with any smell that was not present in Reference Samples 7 to 9. The results are shown in the following Table 9.

**[Table 9]**

| Example | β-caryophyllene oxide concentration (ppb by weight) | score of off-taste intensity | imparted smell |
|---|---|---|---|
| 7 | 100 | 8.6 | none |
| 8 | 1000 | 8.4 | none |
| 9 | 10000 | 8.0 | none |

As shown in Table 9, the evaluation samples (Examples 7 to 9) to which β-caryophyllene oxide was added had lower off-taste intensity scores than Reference Sample 7 (negative control), and they had a weaker off-taste than Reference Sample 7. Therefore, the suppressing effect of β-caryophyllene oxide against the off-taste derived from stevia was confirmed in all of the evaluation samples of Examples 7 to 9.

### <Test 4>

### (Production of Reference Sample 10 (negative control) and Reference Sample 11)

Commercially available cheese sauce (manufactured by Seven & i Holdings Co., Ltd., "Seven Premium 3 SHU NO Cheese NI KODAWATTA Carbonara") was mixed with valine (manufactured by Ajinomoto Co., Inc.), leucine (manufactured by Ajinomoto Co., Inc.), isoleucine (manufactured by Ajinomoto Co., Inc.) and water in the amounts shown in Table 10 below to respectively produce Reference Samples 10 and 11. The commercially available cheese sauce used in this test contained almost no valine, leucine and isoleucine in free forms before valine, leucine and isoleucine were added.

### (Production of Reference Sample 12)

Commercially available cheese sauce (manufactured by Seven & i Holdings Co., Ltd., "Seven Premium 3 SHU NO Cheese NI KODAWATTA Carbonara") was mixed with water in the amounts shown in Table 10 below to produce Reference Sample 12.

**[Table 10]**

| sample raw material | amount of use (g) | | |
|---|---|---|---|
| | Reference Sample 10 | Reference Sample 11 | Reference Sample 12 |
| cheese sauce | 52 | 52 | 52 |
| valine | 0.25 | 0.125 | |
| leucine | 0.5 | 0.25 | |
| isoleucine | 0.25 | 0.125 | |
| water | 47 | 47.5 | 48 |
| total (g) | 100 | 100 | 100 |

### (Production of evaluation sample)

β-caryophyllene oxide was added to Reference Sample 10 (negative control) to the concentration shown in Table 11 below to respectively produce evaluation samples. The amount of water used was appropriately adjusted so that the addition of β-caryophyllene oxide would not change the ratio (concentration) of the sample raw materials other than the water.

**[Table 11]**

| Example | β-caryophyllene oxide concentration (ppb by weight) |
|---|---|
| 10 | 100 |
| 11 | 1000 |
| 12 | 10000 |

### (Sensory evaluation of off-taste intensity)

An expert panel consisting of three trained panelists held each evaluation sample in the mouth and rated the off-taste (bitterness, harsh taste, etc.) intensity of each evaluation sample in increments of 0.1 point according to an evaluation scale in which Reference Sample 10 (negative control) was given "10 points", Reference Sample 11 was given "5 points", and Reference Sample 12 was given "0 point", and the average score of the three panelists was calculated. The expert panel was trained in advance so that the panelists would have a common understanding of how much the off-taste intensity should change to produce a 0.1 point change in the score. They also confirmed whether each evaluation sample was imparted with any smell that was not present in Reference Samples 10 to 12. The results are shown in the following Table 12.

**[Table 12]**

| Example | β-caryophyllene oxide concentration (ppb by weight) | score of off-taste intensity | imparted smell |
|---|---|---|---|
| 10 | 100 | 8 . 5 | none |
| 11 | 1000 | 8.1 | none |
| 12 | 10000 | 7.7 | none |

As shown in Table 12, the evaluation samples (Examples 10 to 12) to which β-caryophyllene oxide was added had lower off-taste intensity scores than Reference Sample 10 (negative control), and they had a weaker off-taste than Reference Sample 10. Therefore, the suppressing effect of β-caryophyllene oxide against the off-taste derived from branched chain amino acids (valine, leucine and isoleucine) was confirmed in all of the evaluation samples of Examples 10 to 12.

### <Test 5>

### (Production of Reference Sample 13 (negative control) and Reference Sample 14)

Commercially available soybean protein (manufactured by FUJI OIL CO., LTD.) was mixed with water in the amounts shown in Table 13 below to respectively produce Reference Sample 13 and 14.

### (Reference Sample 15)

Water was used as Reference Sample 15.

**[Table 13]**

| sample raw material | amount of use (g) | | |
|---|---|---|---|
| | Reference Sample 13 | Reference Sample 14 | Reference Sample 15 |
| soybean protein | 4 | 2 | |
| water | 96 | 98 | 100 |
| total (g) | 100 | 100 | 100 |

### (Production of Evaluation Sample)

β-caryophyllene oxide was added to Reference Sample 13 (negative control) to the concentration shown in Table 14 below to respectively produce Evaluation Samples. The amount of water used was appropriately adjusted so that the addition of β-caryophyllene oxide would not change the ratio (concentration) of the sample raw materials other than the water.

**[Table 14]**

| Example | β-caryophyllene oxide concentration (ppb by weight) |
|---|---|
| 13 | 100 |
| 14 | 1000 |
| 15 | 10000 |

### (Sensory evaluation of off-taste intensity)

An expert panel consisting of three trained panelists held each evaluation sample in the mouth and rated the off-taste (bitterness, harsh taste, astringent taste) intensity of each evaluation sample in increments of 0.1 point according to an evaluation scale in which Reference Sample 13 (negative control) was given "10 points", Reference Sample 14 was given "5 points", and Reference Sample 15 (water) was given "0 point", and the average score of the thee panelists was calculated. The expert panel was trained in advance so that the panelists would have a common understanding of how much the off-taste intensity should change to produce a 0.1 point change in the score. They also confirmed whether each evaluation sample was imparted with any smell that was not present in Reference Samples 13 to 15. The results are shown in the following Table 15.

**[Table 15]**

| Example | β-caryophyllene oxide concentration (ppb by weight) | score of off-taste intensity | imparted smell |
|---|---|---|---|
| 13 | 100 | 8.2 | none |
| 14 | 1000 | 7.7 | none |
| 15 | 10000 | 7.2 | none |

As shown in Table 15, the evaluation samples (Examples 13 to 15) to which β-caryophyllene oxide was added had lower off-taste intensity scores than Reference Sample 13 (negative control), and they had a weaker off-taste than Reference Sample 13. Therefore, the suppressing effect of β-caryophyllene oxide against the off-taste derived from soybean protein was confirmed in all of the evaluation samples of Examples 13 to 15.

### <Test 6>

### (Reference Sample 16 (negative control))

Commercially available creaming powder ("Marim (registered trademark)" manufactured by Ajinomoto AGF, Inc.) was mixed with an emulsifier (fatty acid monoglyceride, manufactured by Taiyo Kagaku Co., Ltd.) and warm water in the amounts shown in Table 16 below to produce Reference Sample 16. The commercially available creaming powder used in this test contained no emulsifier with an off-taste before an emulsifier with an off-taste was added.

### (Production of Reference Sample 17)

Commercially available creaming powder ("Marim (registered trademark)" manufactured by Ajinomoto AGF, Inc.) was mixed with warm water in the amounts shown in Table 16 below to produce Reference Sample 17.

**[Table 16]**

| sample raw material | amount of use (g) | |
|---|---|---|
| | Reference Sample 16 | Reference Sample 17 |
| creaming powder | 10 | 10 |
| emulsifier | 0.04 | |
| warm water | 89.96 | 90 |
| total (g) | 100 | 100 |

### (Production of Evaluation Sample)

β-caryophyllene oxide was added to Reference Sample 16 (negative control) to the concentration shown in Table 17 below to produce evaluation samples. The amount of warm water used was appropriately adjusted so that the addition of β-caryophyllene oxide would not change the ratio (concentration) of the sample raw materials other than the warm water.

**[Table 17]**

| Example | β-caryophyllene oxide concentration (ppb by weight) |
|---|---|
| 16 | 100 |
| 17 | 1000 |
| 18 | 10000 |

### (Sensory evaluation of off-taste intensity)

An expert panel consisting of three trained panelists held each evaluation sample in the mouth and rated the off-taste (bitterness, harsh taste, astringent taste) intensity of each evaluation sample in increments of 0.1 point according to an evaluation scale in which Reference Sample 16 (negative control) was given "10 points" and Reference Sample 17 was given "0 point", and the average score of the three panelists was calculated. The expert panel was trained in advance so that the panelists would have a common understanding of how much the off-taste intensity should change to produce a 0.1 point change in the score. They also confirmed whether each evaluation sample was imparted with any smell that was not present in Reference Samples 16 and 17. The results are shown in the following Table 18.

**[Table 18]**

| Example | β-caryophyllene oxide concentration (ppb by weight) | score of off-taste intensity | imparted smell |
|---|---|---|---|
| 16 | 100 | 8.5 | none |
| 17 | 1000 | 7.8 | none |
| 18 | 10000 | 7.3 | none |

As shown in Table 18, the evaluation samples (Examples 16 to 18) to which β-caryophyllene oxide was added had lower off-taste intensity scores than Reference Sample 16 (negative control), and they had a weaker off-taste than Reference Sample 16. Therefore, the suppressing effect of β-caryophyllene oxide against the off-taste derived from the emulsifier was confirmed in all of the evaluation samples of Examples 16 to 18.

### <Test 7>

### (Reference Sample 18 (negative control))

Commercially available white sauce (manufactured by Heinz Japan Ltd.) was mixed with sodium acetate and warm water in the amounts shown in Table 19 below, and then adjusted to pH 6 to produce Reference Sample 18. The commercially available white sauce used in this test contained almost no sodium acetate before sodium acetate was added.

### (Production of Reference Sample 19)

Commercially available white sauce (manufactured by Heinz Japan Ltd.) was mixed with warm water in the amounts shown in Table 19 below, and then adjusted to pH 6 to produce Reference Sample 19.

**[Table 19]**

| sample raw material | amount of use (g) | |
|---|---|---|
| | Reference Sample 18 | Reference Sample 19 |
| white sauce | 50 | 50 |
| sodium acetate | 0.5 | |
| warm water | 49.5 | 50 |
| total (g) | 100 | 100 |

### (Production of Evaluation Sample)

β-caryophyllene oxide was added to Reference Sample 18 (negative control) to the concentration shown in Table 20 below to produce evaluation samples. The amount of warm water used was appropriately adjusted so that the addition of β-caryophyllene oxide would not change the ratio (concentration) of the sample raw materials other than the warm water.

**[Table 20]**

| Example | β-caryophyllene oxide concentration (ppb by weight) |
|---|---|
| 19 | 100 |
| 20 | 1000 |
| 21 | 10000 |

### (Sensory evaluation of off-taste intensity)

An expert panel consisting of three trained panelists held each evaluation sample in the mouth and rated the off-taste (bitterness, harsh taste, astringent taste) intensity of each evaluation sample in increments of 0.1 point according to an evaluation scale in which Reference Sample 18 (negative control) was given "10 points" and Reference Sample 19 was given "0 point", and the average score of the three panelists was calculated. The expert panel was trained in advance so that the panelists would have a common understanding of how much the off-taste intensity should change to produce a 0.1 point change in the score. They also confirmed whether each evaluation sample was imparted with any smell that was not present in Reference Samples 18 and 19. The results are shown in the following Table 21.

**[Table 21]**

| Example | β-caryophyllene oxide concentration (ppb by weight) | score of off-taste intensity | imparted smell |
|---|---|---|---|
| 19 | 100 | 7.3 | none |
| 20 | 1000 | 6.7 | none |
| 21 | 10000 | 6.2 | none |

As shown in Table 21, the evaluation samples (Examples 19 to 21) to which β-caryophyllene oxide was added had lower off-taste intensity scores than Reference Sample 18 (negative control), and they had a weaker off-taste than Reference Sample 18. Therefore, the suppressing effect of β-caryophyllene oxide against the off-taste derived from sodium acetate was confirmed in all of the evaluation samples of Examples 19 to 21.

These test results suggest that β-caryophyllene oxide can enhance the saltiness. The results also suggest that β-caryophyllene oxide can suppress off-flavors.

### <Test 8>

### (Production of branched chain amino acid solution)

Leucine, valine and isoleucine were dissolved in water to the concentrations shown in Table 22 below to respectively produce branched chain amino acid solutions (negative control (NC) solution, Reference Sample 20 and Reference Sample 21).

**[Table 22]**

| | leucine (%) | isoleucine (%) | valine (%) |
|---|---|---|---|
| NC solution | 0.50 | 0.25 | 0.25 |
| Reference Sample 20 | 0.45 | 0.23 | 0.23 |
| Reference Sample 21 | 0.40 | 0.20 | 0.20 |

### (Production of Evaluation Sample)

β-caryophyllene oxide and/or γ-Glu-Val-Gly were added to the NC solution to the concentrations shown in Table 23 below to produce evaluation samples.

**[Table 23]**

| sample No. | β-caryophyllene oxide | γ-Glu-Val-Gly |
|---|---|---|
| 1 | 1 ppb | |
| 2 | 3 ppb | |
| 3 | 10 ppb | |
| 4 | 30 ppb | |
| 5 | 100 ppb | |
| 6 | | 1 ppm |
| 7 | | 3 ppm |
| 8 | | 10 ppm |
| 9 | 10 ppb | 3 ppm |
| 10 | 30 ppb | 3 ppm |

### (Sensory evaluation of off-taste intensity)

A sensory evaluation was performed on the intensity of the off-taste (bitterness) of evaluation samples.

The sensory evaluation of off-taste intensity was performed by an expert panel consisting of four trained panelists and using a scoring method. Specifically, the four panelists respectively held evaluation sample in the mouth and rated the off-taste (bitterness) intensity of each evaluation sample in increments of 0.01 point according to an evaluation scale in which NC solution was given "1.00 point", Reference Sample 20 was given "0.90 points", and Reference Sample 21 was given "0.80 points", and the average score of the four panelists was calculated. The expert panel was trained in advance so that the panelists would have a common understanding of how much the off-taste (bitterness) intensity should change to produce a 0.01 point change in the score. They also confirmed whether each evaluation sample was imparted with any smell that was not present in NC solution.

The results are shown in the following Table 24. The off-flavor suppression score in the Table was calculated by subtracting the off-flavor intensity score of each evaluation sample from the off-flavor intensity score of the NC solution (1.00 point).

**[Table 24]**

| sample No. | β-caryophyllene oxide | γ-Glu-Val-Gly | score of off-taste intensity | off-taste suppression score | presence or absence of smell |
|---|---|---|---|---|---|
| 1 | 1 ppb | | 0.99 | 0.01 | no smell |
| 2 | 3 ppb | | 0.96 | 0.04 | no smell |
| 3 | 10 ppb | | 0.94 | 0.06 | no smell |
| 4 | 30 ppb | | 0.92 | 0.09 | no smell |
| 5 | 100 ppb | | 0.90 | 0.10 | no smell |
| 6 | | 1 ppm | 0.96 | 0.04 | no smell |
| 7 | | 3 ppm | 0.94 | 0.07 | no smell |
| 8 | | 10 ppm | 0.88 | 0.12 | no smell |
| 9 | 10 ppb | 3 ppm | 0.83 | 0.18 | no smell |
| 10 | 30 ppb | 3 ppm | 0.82 | 0.18 | no smell |

As shown in Table 24, the evaluation samples to which β-caryophyllene oxide was added (sample numbers 1 to 5) had lower scores of off-taste intensity than the NC solution (negative control). Among them, the evaluation samples to which β-caryophyllene oxide was added at a concentration of 30 ppb by weight or more (sample numbers 4 and 5) had a clearly weaker off-taste than the NC solution, and a suppression effect on the off-taste (bitterness) derived from branched-chain amino acids was confirmed.

In addition, a suppression effect on the off-taste (bitterness) derived from branched-chain amino acids was also confirmed in the evaluation samples to which γ-Glu-Val-Gly was added together with β-caryophyllene oxide (sample numbers 9 and 10). The off-taste suppression scores of these evaluation samples (evaluation samples to which β-caryophyllene oxide and γ-Glu-Val-Gly were added together) were all "0.18 points", which was higher than the sum of the off-taste suppression scores of the evaluation samples (sample numbers 3, 4 and 7) to which β-caryophyllene oxide and γ-Glu-Val-Gly were added alone (theoretical additive suppression score; the sum of the off-taste suppression scores of evaluation sample numbers 3 and 7 was 0.13 points, and the sum of the off-taste suppression scores of evaluation sample numbers 4 and 7 was 0.16 points). Therefore, the off-taste suppression effect obtained in the evaluation samples to which β-caryophyllene oxide and γ-Glu-Val-Gly were added together was recognized to be a synergistic effect.

### <Test 9>

### (Production of evaluation sample)

Meatballs were produced as evaluation samples by the following steps (1) to (6).
(1) Commercially available ground pork, sodium chloride (manufactured by Naikai Salt Industries Co., Ltd.), and potassium chloride (manufactured by Uji Pharmaceutical Co., Ltd.) were mixed in the ratios shown in Table 25 below, and the mixture was stirred in a stand mixer ("Kitchen Aid", model: KSM5WH, manufactured by FMI Corporation) until the entire mixture was uniformly mixed. The speed scale of the stand mixer was set to "1".
(2) To the mixture obtained in the above-mentioned (1) were added finely chopped onion, water, salad oil (manufactured by J-OIL MILLS, INC.), potato starch (manufactured by Minami-Tokachi Rationalized Potato Starch Factory), and β-caryophyllene solution or β-caryophyllene oxide solution in the ratios shown in Table 25 below, and the mixture was stirred in the above-mentioned stand mixer (speed scale setting: 1) until the entire mixture was uniformly mixed. The β-caryophyllene solution was prepared by dissolving β-caryophyllene (manufactured by Sigma-Aldrich) in propylene glycol to a concentration of 1000 ppm by weight, and the β-caryophyllene oxide solution was prepared by dissolving β-caryophyllene oxide (manufactured by Penta Manufacturing Company) in propylene glycol to a concentration of 1000 ppm by weight.
(3) The mixture obtained in the above-mentioned (2) was weighed into 15 g portions and formed into dumplings to produce meatballs.
(4) The meatballs produced in the above-mentioned (3) were frozen for 1 hour.
(5) Three frozen meatballs obtained in the above-mentioned (4) were covered with plastic wrap and thawed by heating in a microwave oven (SANYO EMO-100S, manufactured by SANYO Electric Co., Ltd.) at 600 W for 1 minute and 30 seconds.
(6) The thawed meatballs were left at room temperature for 10 minutes and then subjected to a sensory evaluation (described below).

### (Production of Reference Sample 22 (positive control))

In the same manner as in the above-mentioned evaluation sample except that, in step (1) of the production of the meatballs of the above-mentioned evaluation sample, "commercially available ground pork and sodium chloride" were mixed in the ratios shown in Table 25 below instead of "commercially available ground pork, sodium chloride, and potassium chloride" and, in step (2), "finely chopped onion, water, salad oil, and potato starch" were added to the mixture obtained in step (1) in the ratios shown in Table 25 below instead of the "finely chopped onion, water, salad oil, potato starch, and β-caryophyllene solution or β-caryophyllene oxide solution", meatballs were prepared and used for sensory evaluation (described below).

### (Production of Reference Sample 23 (negative control))

In the same manner as in the above-mentioned evaluation sample except that, in step (2) of the production of the meatballs of the above-mentioned evaluation sample, "finely chopped onion, water, salad oil, and potato starch" were added to the mixture obtained in step (1) in the ratios shown in Table 25 below instead of the "finely chopped onion, water, salad oil, potato starch, and β-caryophyllene solution or β-caryophyllene oxide solution", meatballs were prepared and used for sensory evaluation (described below).

**[Table 25]**

| | Reference Sample 22 | Reference Sample 23 | Evaluation Sample | |
|---|---|---|---|---|
| ground pork | 70.0 | 70.0 | 70.0 | 70.0 |
| sodium chloride | 1.5 | 0.6 | 0.6 | 0.6 |
| finely chopped onion | 23.0 | 23.0 | 23.0 | 23.0 |
| salad oil | 0.5 | 0.5 | 0.4 | 0.4 |
| water | 3.0 | 3.0 | 3.0 | 3.0 |
| potato starch | 2.0 | 2.0 | 2.0 | 2.0 |
| potassium chloride | | 0.9 | 0.9 | 0.9 |
| β-caryophyllene solution | | | 0.1 | |
| β-caryophyllene oxide solution | | | | 0.1 |
| total (wt%) | 100.0 | 100.0 | 100.0 | 100.0 |

### (Sensory evaluation of saltiness intensity and level of off-taste intensity)

A specialist panel consisting of three trained panelists ate each evaluation sample and rated the saltiness intensity and level of off-taste (bitterness, harsh taste) of each evaluation sample in increments of 0.1 point according to the following evaluation scale, in which Reference Sample 22 (positive control) was given "3 points" and Reference Sample 23 (negative control) was given "0 point", and the average score of the three panelists was calculated. When the calculated average score was 1 point or more, it was determined that there was an effect (saltiness enhancing effect, off-taste suppression effect). The expert panel was trained in advance so that the panelists would have a common understanding of how much the saltiness intensity or off-taste (bitterness, harsh taste) intensity level should change to produce a 0.1 point change in the score. The results are shown in the following Table 26.

### [Saltiness intensity evaluation scale]

3 points: very strong saltiness compared to Reference Sample 23 (saltiness equivalent to Reference Sample 22)
2 points: strong saltiness compared to Reference Sample 23
1 point: slightly stronger saltiness compared to Reference Sample 23
0 point: same saltiness as Reference Sample 23
[Off-taste (bitterness, harsh taste) level evaluation scale]
3 points: no bitterness or harsh taste at all (same as Reference Sample 22)
2 points: almost no bitterness or harsh taste
1 point: very little bitterness or harsh taste
0 point: bitterness or harsh taste same as Reference Sample 23

**[Table 26]**

| sensory evaluation results (score) | evaluation sample using β-caryophyllene solution as raw material | evaluation sample using β-caryophyllene oxide solution as raw material |
|---|---|---|
| saltiness intensity | 0.0 | 1.7 |
| off-taste level | 0.0 | 1.4 |

As shown in Table 26, the evaluation sample in which a β-caryophyllene oxide solution was used as a raw material had saltiness intensity score of 1 point or more, and saltiness enhancing effect of β-caryophyllene oxide was confirmed. On the other hand, the evaluation sample in which a β-caryophyllene solution was used as a raw material had saltiness intensity score of 0.0 point, and saltiness enhancing effect was not found.

In addition, the evaluation sample in which a β-caryophyllene oxide solution was used as a raw material had an off-taste level score of 1 point or more, and an effect of β-caryophyllene oxide in suppressing the off-taste (bitterness, a harsh taste) derived from potassium chloride was confirmed. On the other hand, the evaluation sample in which a β-caryophyllene solution was used as a raw material had an off-taste level score of 0.0 point, and an off-taste suppression effect was not found.

The above results confirm that β-caryophyllene oxide can enhance the saltiness and suppress the off-taste of off-taste substances also in solid oral products (e.g. solid foods such as meatballs, etc.).

### <Test 10>

### (Production of Reference Samples 1 to 3)

In the same manner as in Test 1, Reference Samples 1 to 3 were respectively produced.

### (Production of Evaluation Sample)

β-caryophyllene oxide and/or γ-Glu-Val-Gly were added to Reference Sample 1 (negative control) to the concentration shown in Table 27 below to produce evaluation samples. The amount of warm water used was appropriately adjusted so that the addition of β-caryophyllene oxide and/or γ-Glu-Val-Gly would not change the ratio (concentration) of the sample raw materials other than the warm water.

**[Table 27]**

| sample No. | β-caryophyllene oxide (ppb by weight) | γ-Glu-Val-Gly (ppb by weight) |
|---|---|---|
| 11 | 50 | |
| 12 | 100 | |
| 13 | 1000 | |
| 14 | 10000 | |
| 15 | | 500 |
| 16 | | 1000 |
| 17 | | 5000 |
| 18 | 50 | 500 |
| 19 | 100 | 1000 |
| 20 | 1000 | 5000 |

### (Sensory evaluation of saltiness intensity)

An expert panel consisting of four trained panelists held each evaluation sample in the mouth and rated the saltiness intensity of each evaluation sample in increments of 0.1 point according to an evaluation scale in which Reference Sample 1 (negative control) was given "0 point", Reference Sample 2 was given "5 points", and Reference Sample 3 was given "10 points", and the average score of the four panelists was calculated. When the calculated average score was 3 points or more, the presence of saltiness enhancing effect was determined. The expert panel was trained in advance so that the panelists would have a common understanding of how much the saltiness intensity should change to produce a 0.1 point change in the score. They also confirmed whether each evaluation sample was imparted with any smell that was not present in Reference Samples 1 to 3. The results are shown in the following Table 28.

**[Table 28]**

| sample No. | β-caryophyllene oxide (ppb by weight) | γ-Glu-Val-Gly (ppb by weight) | score of saltiness intensity | imparted smell |
|---|---|---|---|---|
| 11 | 50 | | 2.1 | none |
| 12 | 100 | | 3.8 | none |
| 13 | 1000 | | 5.8 | none |
| 14 | 10000 | | 6.8 | none |
| 15 | | 500 | 1.8 | none |
| 16 | | 1000 | 4.4 | none |
| 17 | | 5000 | 6.1 | none |
| 18 | 50 | 500 | 5.8 | none |
| 19 | 100 | 1000 | 6.3 | none |
| 20 | 1000 | 5000 | 8.8 | none |

As shown in Table 28, the evaluation samples to which β-caryophyllene oxide was added (sample numbers 11 to 14) had higher scores of saltiness intensity than Reference Sample 1. Among them, the evaluation samples to which β-caryophyllene oxide was added at a concentration of 100 ppb by weight or more (sample numbers 12 to 14) had an effectively enhanced saltiness.

In addition, it was confirmed that the saltiness enhancing effect increased in the evaluation samples to which β-caryophyllene oxide and γ-Glu-Val-Gly were added together (sample numbers 18 to 20). In particular, sample number 18 showed a synergistic saltiness enhancing effect due to the combination of β-caryophyllene oxide and γ-Glu-Val-Gly, compared to sample number 11 (β-caryophyllene oxide concentration: 50 ppb by weight) and sample number 15 (γ-Glu-Val-Gly concentration: 500 ppb by weight).

### [Industrial Applicability]

According to the present invention, an agent for enhancing saltiness is provided. The agent of the present invention can enhance the saltiness of a sodium chloride-containing oral product (e.g., sodium chloride-containing food, sodium chloride-containing oral medicament, etc.) without imparting a smell to the oral product.

In addition, according to the present invention, an oral product with an enhanced saltiness and a production method thereof are provided. The production method of the present invention can produce a sodium chloride-containing oral product (e.g., sodium chloride-containing food, sodium chloride-containing oral medicament, etc.) with an enhanced saltiness, without imparting a smell.

In addition, according to the present invention, a method for enhancing the saltiness is provided. The method of the present invention can enhance the saltiness of a sodium chloride-containing oral product (e.g., sodium chloride-containing food, sodium chloride-containing oral medicament, etc.) without imparting a smell to the oral product.

In addition, according to the present invention, an agent for suppressing an off-taste is provided. The agent of the present invention can suppress the off-taste of an off-taste substance-containing oral product (e.g., off-taste substance-containing food, off-taste substance-containing oral medicament, etc.) without imparting a smell to the oral product.

In addition, according to the present invention, an oral product with a suppressed off-taste and a production method thereof are provided. The production method of the present invention can produce an off-taste substance-containing oral product (e.g., off-taste substance-containing food, off-taste substance-containing oral medicament, etc.) with a suppressed off-taste, without imparting a smell.

In addition, according to the present invention, a method for suppressing an off-taste is provided. The method of the present invention can suppress an off-taste of an off-taste substance-containing oral product (e.g., off-taste substance-containing food, off-taste substance-containing oral medicament, etc.) without imparting a smell to the oral product.

This application is based on a patent application No. 2022-173729 filed in Japan (filing date: October 28, 2022) and a patent application No. 2023-137572 filed in Japan (filing date: August 25, 2023), the contents of which are incorporated in full herein.

## Claims

1. An agent for enhancing saltiness or suppressing an off-taste, which comprises β-caryophyllene oxide.

2. The agent according to claim 1, further comprising γ-glutamyl peptide or a salt thereof.

3. The agent according to claim 2, wherein the γ-glutamyl peptide is γ-Glu-Val-Gly.

4. The agent according to claim 1, which is an agent for enhancing saltiness of a sodium chloride-containing oral product.

5. The agent according to claim 1, which is an agent for suppressing an off-taste of an off-taste substance-containing oral product.

6. The agent according to claim 5, wherein the off-taste substance comprises at least one substance selected from the group consisting of saltiness-substituting or -enhancing substance, amino acid or a salt thereof, a high-intensity sweetener, a plant-derived protein, an emulsifier, and a bacteriostatic agent.

7. A method for producing a sodium chloride- or off-taste substance-containing oral product, comprising adding β-caryophyllene oxide.

8. The production method according to claim 7, further comprising adding γ-glutamyl peptide or a salt thereof.

9. The production method according to claim 8, wherein the γ-glutamyl peptide is γ-Glu-Val-Gly.

10. The production method according to claim 7, wherein the off-taste substance comprises at least one substance selected from the group consisting of saltiness-substituting or - enhancing substance, amino acid or a salt thereof, a high-intensity sweetener, a plant-derived protein, an emulsifier, and a bacteriostatic agent.

11. A method for enhancing saltiness or suppressing an off-taste of a sodium chloride- or off-taste substance-containing oral product, comprising adding β-caryophyllene oxide to the oral product.

12. The method according to claim 11, further comprising adding γ-glutamyl peptide or a salt thereof to the sodium chloride- or off-taste substance-containing oral product.

13. The method according to claim 12, wherein the γ-glutamyl peptide is γ-Glu-Val-Gly.

14. The method according to claim 11, wherein the off-taste substance comprises at least one substance selected from the group consisting of saltiness-substituting or -enhancing substance, amino acid or a salt thereof, a high-intensity sweetener, a plant-derived protein, an emulsifier, and a bacteriostatic agent.

15. A composition comprising β-caryophyllene oxide, and γ-glutamyl peptide or a salt thereof.
